# EUROPÄISCHE PATENTSCHRIFT

(11) **EP 1 393 184 B1**
(45) Veröffentlichungstag und Bekanntmachung des Hinweises auf die Patenterteilung: **17.10.2012**
(21) Anmeldenummer: 02740602.4
(22) Anmeldetag: 14.05.2002
(51) Int. Cl.: G06F 12/00, G06F 12/10

(54) **VORRICHTUNG UND VERFAHREN ZUM ERMITTELN EINER PHYSIKALISCHEN ADRESSE AUS EINER VIRTUELLEN ADRESSE UNTER VERWENDUNG EINER HIERARCHISCHEN ABBILDUNGSVORSCHRIFT MIT KOMPRIMIERTEN KNOTEN**
DEVICE AND METHOD FOR DETERMINING A PHYSICAL ADDRESS FROM A VIRTUAL ADDRESS, USING A HIERARCHICAL MAPPING RULE COMPRISING COMPRESSED NODES
DISPOSITIF ET PROCEDE POUR DETERMINER UNE ADRESSE PHYSIQUE A PARTIR D'UNE ADRESSE VIRTUELLE A L'AIDE D'UNE REGLE DE REPRESENTATION HIERARCHIQUE COMPRENANT DES NOEUDS COMPRIMES

(30) Priorität: 05.06.2001 DE 10127198
(43) Veröffentlichungstag der Anmeldung: 03.03.2004
(73) Patentinhaber: Infineon Technologies AG, 85579 Neubiberg (DE)
(72) Erfinder: GAMMEL, Berndt, 85570 Markt-Schwaben (DE); SEDLAK, Holger, 82054 Sauerlach (DE); MAY, Christian, 81677 Muenchen (DE); LEDWA, Ralph, 87616 Marktoberdorf (DE)
(74) Vertreter: Schoppe, Fritz
(86) Internationale Anmeldenummer: PCT/EP2002/005319
(87) Internationale Veröffentlichungsnummer: WO 2002/099645

(56) Entgegenhaltungen:
- DE-A- 4 405 845
- US-A- 4 758 946
- LIEDTKE J ET AL: "GUARDED PAGE TABLES ON MIPS R4600 OR AN EXERCISE IN ARCHITECTURE-DEPENDENT MICRO OPTIMIZATION" OPERATING SYSTEMS REVIEW (SIGOPS), ACM HEADQUARTER. NEW YORK, US, Bd. 30, Nr. 1, 1996, Seiten 4-15, XP000584869

## Beschreibung

Die vorliegenden Erfindung bezieht sich auf Rechnersysteme und insbesondere auf Rechnersysteme mit virtueller Adressierung.

Die virtuelle Adressierung ist seit längerem aus dem Bereich der Workstations bekannt. Unter Verwendung einer bestimmten Abbildungsvorschrift werden virtuelle Adressen auf physikalische Adressen abgebildet. Die physikalischen Adressen adressieren Speicherzellen eines physikalischen Speichers, wie z. B. des Arbeitsspeichers, einer Festplatte, eines Bandspeichers etc. Virtuelle Adressen verweisen dagegen nicht direkt auf physikalische Speicherzellen, sondern lediglich indirekt, über die Abbildungsvorschrift. Der Vorteil dieser Adressierungsart besteht darin, daß sich der Programmierter einer Anwendung nicht um die in einem Rechnersystem vorhandenen diversen physikalischen Speicher kümmern muß. Der Programmierer hat einen virtuellen Adressraum zur Verfügung, den er für sein Programm je nach Bedarf nützen kann. Die Abbildung auf den physikalischen Adressraum, den ein spezielles Rechnersystem zur Verfügung stellt, wird getrennt vom Programmcode erstellt, so daß durch Bereitstellen verschiedener Abbildungsvorschriften ein mit virtuellen Adressen programmiertes Programm auf verschiedenen Rechnersystemen laufen kann.

In einem Prozessor mit einem virtuellen Speichersystem läuft eine Applikation im sogenannten virtuellen Adressraum ab. Jede Adresse des virtuellen Speichers, an der sich von der Applikation les/schreibbare Daten oder ausführbarer Code befinden, ist auf eine Adresse im physikalischen Speicher abgebildet, an der diese Daten bzw. dieser Code tatsächlich gespeichert sind. Die virtuelle Adresse (VA) und die über die Abbildungsvorschrift zugeordnete physikalische Adresse (PA) müssen keinerlei Bezug zueinander haben. Der virtuelle Adressraum kann ferner wesentlich größer als der physikalische Adressraum sein.

Virtuelle Adressen, an denen sich keine les/schreibbaren Daten oder ausführbarer Code befinden, werden in der Regel nicht auf einen physikalischen Speicher abgebildet. Für die ausgeführte Applikation ist diese Abbildung völlig transparent.

Bei einer Organisation des Speichers in Pages bzw. Seiten ist der virtuelle Adressraum in gleich große, überlappungsfreie Speicherbereich unterteilt. Einer Seite im virtuellen Adressraum ist eine Seite im physikalischen Adressraum über die Abbildungsvorschrift zugeordnet, wobei die Seite im physikalischen Adressraum auch als Page Frame bezeichnet wird.

Der Nutzdatenspeicher eines Page Frames des physikalischen Adressraums ist genauso groß wie der einer Page des virtuellen Adressraums.

Die Zuordnung einer virtuellen Seite zu einer physikalischen Seite wird üblicherweise über die sogenannte Seitentabelle oder Page Table erreicht, welche Adresspaare von jeweiligen Startadressen der virtuellen Seiten und der zugeordneten physikalischen Seiten enthält.

Bei Workstations befindet sich ein Teil der Page Table in einem Cache, der auch als "Translation Look Aside Buffer (TLB) bezeichnet wird. Befindet sich das Startadresspaar für eine virtuelle Seite und die zugeordnete physikalische Seite in dem TLB, so erfolgt die Berechnung der Adressabbildung in den virtuellen Speicherbereich beschleunigt, da lediglich ein Zugriff auf eine Tabelle erforderlich ist, um die einer virtuellen Adresse zugeordnete physikalische Adresse zu erhalten.

Befindet sich das Startadresspaar, d. h. die virtuelle Adresse und die zugeordnete physikalische Adresse, nicht im TLB, so findet ein TLB-Miss (TLB-Fehlschlag) statt, was üblicherweise zu einem Trap an das Betriebssystem führt, welches das Adressen-Tupel in den TLB nachtragen muß.

Im Bereich der Workstations wird die Abbildungsvorschrift zwischen virtuellem Adressraum und physikalischem Adressraum, die beispielsweise als eine einzige Page Table implementiert sein kann, im flüchtigen Arbeitsspeicher gehalten. Wenn eine Workstation hochgefahren wird, so startet sie zunächst im reellen Adressierungsmodus. Dies bedeutet, daß das Betriebssystem der Workstation die CPU der Workstation veranlasst, im reellen, d. h. physikalischen Adressierungsmodus, in dem flüchtigen Arbeitsspeicher der Workstation eine Page Table nach und nach aufzubauen. Erst wenn eine Page Table konstruiert ist, kann die Workstation in den virtuellen Adressierungsmodus umschalten. Frägt dann die CPU nach Daten an einer virtuellen Adresse, so wird im flüchtigen Arbeitsspeicher der CPU die dazu gehörige physikalische Adresse ermittelt, um die Daten von dem Speicher abrufen zu können. Übliche Workstations zeichnen sich also dadurch aus, daß sie in einem realen Adressierungsmodus hochfahren und dann, wenn die Abbildungsvorschrift von dem virtuellen Adressraum zu dem physikalischen Adressraum im flüchtigen Speicher aufgebaut ist, in den virtuellen Adressierungsmodus umschalten.

Nachteilig an diesem Konzept ist zum einen die Tatsache, daß ein relativ großer Arbeitsspeicherbereich benötigt wird, um eine Page Table zu speichern. Dieser Nachteil ist für Workstations nicht von größter Bedeutung, da sie sehr große Mengen an Arbeitsspeicher zur Verfügung haben. Für andere Anwendungen, wie z. B. für sicherheitsrelevante Rechnersysteme, wie sie beispielsweise in Chipkarten-ICs implementiert sind, sind die Speicherressourcen aufgrund des geringen zur Verfügung stehenden Platzes begrenzt. Eine Bereitstellung einer Menge an flüchtigem Arbeitsspeicher, um eine Page Table zu speichern, führt dazu, daß die auf der Chipkarte ausgeführten Applikationen unter Umständen zu wenig Arbeitsspeicher haben und damit Leistungseinbußen erfahren.

Ein weiterer Nachteil des bekannten Konzepts besteht darin, daß ein wesentlicher Verwaltungsaufwand nötig ist, um zunächst, beim Hochfahren des Rechnersystems, die Page Table aufzubauen, d. h. aus gespeicherten Informationen nach und nach die Adressenzuordnungen zu berechnen und abzuspeichern. Neben der Tatsache, daß dafür Rechnerressourcen erforderlich sind, müssen auch entsprechende Programme auf einer Chipkarte bereitgestellt werden, um die für den virtuellen Adressierungsmodus erforderlichen Vorkehrungen zu treffen. Auch solche Programme benötigen Speicherplatz, der aus Platzgründen insbesondere bei Chipkarten oder anderen Sicherheits-ICs ein rares Gut ist.

Im Fachbuch "Computer Architecture: a quantitative approach", von David A. Patterson, zweite Ausgabe, 1996, Morgan Kaufmann Publishers, Inc., Seiten 449-453 ist die Speicherverwaltung des Alpha-AXP-Prozessors beschrieben. Als Abbildungsvorschrift zur Ermittlung einer physikalischen Adresse aus einer virtuellen Adresse wird eine hierarchische Baumstruktur mit drei Ebenen verwendet. Eine Knotenebene umfaßt mindestens einen Knoten mit einer Page Table. Die virtuelle Adresse ist in Abschnitte aufgeteilt, wobei jeder Abschnitt der virtuellen Adresse einer Knotenebene zugeordnet ist. Die Adressübersetzung beginnt damit, daß das Adressfeld der höchsten Ebene einem Page-Table-Basisregister hinzugefügt wird, woraufhin der Speicher an dieser Position ausgelesen wird, um die Basis der Page Table der zweiten Ebene zu erhalten. Das Adressfeld der virtuellen Adresse für die zweite Ebene wird dann wiederum an diese neu abgerufene Adresse hinzugefügt. Dann wird wieder auf den Speicher zugegriffen, um die Basis der Page Table der dritten Ebene zu erhalten. Das Adressfeld der dritten Ebene wird dieser Basisadresse hinzugefügt, woraufhin der Speicher unter Verwendung dieser Summe ausgelesen wird, um die physikalische Adresse der Seite zu erhalten, auf die verwiesen wird. Dieser Adresse wird ein Page-Offset hinzugefügt, um die physikalische Adresse zu erhalten, die der virtuellen Adresse zugeordnet ist. Jede Page Table in der Alpha-AXP-Architektur paßt in eine einzige Seite, so daß alle Page-Table-Adressen physikalische Adressen sind, die keiner weiteren Übersetzung bedürfen. Jede Page Table für jede Knotenebene ist daher genau eine physikalische Speicherseite lang.

Falls der virtuelle Adressraum größer ist als der physikalische Adressraum, was insbesondere dann von Vorteil ist, wenn Flexibilität für zukünftige Erweiterungen des physikalischen Adressraums gewünscht wird, enthalten die Page Tables, d. h. die Knotenlisten der Knoten, eine hohe Anzahl von Null-Einträgen, d. h. von Einträgen, die auf keine physikalische Adresse oder aber auf keinen Knoten einer niedrigeren Knotenebene verweisen. Aufgrund der Tatsache, daß jede Page Table genau eine physikalische Speicherseite lang ist, wird durch die bekannte hierarchische Adressierung sehr viel Speicherplatz vergeudet. Die Menge an vergeudetem Speicherplatz wird um so größer, je größer der virtuelle Adressraum im Vergleich zum physikalischen Adressraum ist. Der Speicher, der durch Null-Einträge in den Knotenlisten eingenommen wird, führt insbesondere bei Rechnersystemen mit begrenzten Speicherressourcen, wie sie auf Chipkarten, Smartcards oder Sicherheits-ICs zu finden sind, dazu, daß mehr Speicherplatz beispielsweise in Form eines externen RAMs zur Verfügung gestellt werden muß, was die Chipkarte teurer macht. Wenn dagegen aus Chipplatzgründen kein weiterer Speicher zur Verfügung gestellt werden kann, sind besonders die Arbeitsspeicherressourcen der Chipkarte begrenzter als unbedingt erforderlich, was dazu führt, daß weniger aufwendige Programme in der Chipkarte gerechnet werden können, oder daß die Performance der Chipkarte leidet.

Die DE 44 05 845 A1 offenbart ein Verfahren zum Abbilden eines ersten Bitstrings mit einer ersten Länge auf einen zweiten Bitstring mit einer zweiten Länge. Diese Abbildung dient zum Umsetzen einer virtuellen Speicheradresse eines virtuellen Speichers in eine Realadresse eines Realspeichers. Die Umsetzung erfolgt in mehreren Stufen. Hierzu wird zunächst ein erstes Bit (oder mehrere erste Bits) einer virtuellen Adresse genommen, um auf eine Liste zuzugreifen. Wird nur ein Bit der virtuellen Adresse betrachtet, so hat die Liste immer genau zwei Einträge. Ist das Bit der virtuellen Adresse eine logische "1", so wird ein Eintrag der Liste genommen. Ist das Bit dagegen eine "0", so wird der andere Eintrag der Liste genommen. Der ausgewählte Listeneintrag umfaßt einen Zeiger auf eine Realadresse, an der eine nächste Liste steht. Zusätzlich umfaßt der Listeneintrag einen Guard-Wert mit variabler Länge. Hat der Guard-Wert eine Länge größter "0", so wird eine der Länge des Guard-Werts entsprechende Anzahl von Bits von der virtuellen Adresse bei der weiteren Adreßübersetzung überbrückt. Es werden somit so viele Knoten bei der Adreßübersetzung "übersprungen", wie durch die Länge des Guard-Werts gegeben sind. Damit wird erreicht, daß die Anzahl der Umsetzungsschritte, um von einer virtuellen Adresse zu einer realen Adresse zu kommen, aufgrund der Abkürzungen durch die Guard-Werte reduziert wird.

Das US-Patent Nr. 4,758,946 offenbart ein konventionelles Seiten-Map-System für einen virtuellen Speicher mit nicht-komprimierten Knotenlisten.

Die Aufgabe der vorliegenden Erfindung besteht darin, ein effizienteres Konzept zum Ermitteln einer physikalischen Adresse aus einer virtuellen Adresse sowie ein effizienteres Rechnersystem zu schaffen.

Diese Aufgabe wird durch ein Verfahren zum Ermitteln einer physikalischen Adresse aus einer virtuellen Adresse nach Patentanspruch 1, durch eine Vorrichtung zum Ermitteln einer physikalischen Adresse aus einer virtuellen Adresse nach Patentanspruch 9 oder durch ein Rechnersystem nach Patentanspruch 10 gelöst.

Der vorliegenden Erfindung liegt die Erkenntnis zugrunde, daß eine Komprimierung von Knotenlisten durchgeführt werden muß, um den Speicherplatz, der durch die hierarchische Abbildungsvorschrift zwischen virtueller Adresse und physikalischer Adresse eingenommen wird, zu reduzieren. Erfindungsgemäß wird bei einer Adressierungsstruktur, bei der der virtuelle Adressraum größer als der physikalische Adressraum ist, und bei der hierarchisch angeordnete Knotenebenen vorhanden sind, ein Komprimierungsindikator zusammen mit der Abbildungsvorschrift abgespeichert ist, der beim Ermitteln eines Eintrags in einer Knotenliste eines Knotens zusammen mit einem entsprechenden Abschnitt der virtuellen Adresse verwendet wird, um den ermittelten Eintrag zu lesen und dann unter Verwendung des ermittelten Eintrags die physikalische Adresse herauszufinden. Die hierarchische Abbildungsvorschrift umfaßt hierarchisch angeordnete Knotenebenen, wobei eine Knotenebene zumindest einen Knoten aufweist. Jedem Knoten ist eine Knotenliste mit Listeneinträgen zugeordnet. Ferner hat die virtuelle Adresse Abschnitte, wobei je ein Abschnitt der virtuellen Adresse je einer Knotenebene zugeordnet ist.

Die Knotenliste eines Knotens umfaßt Listeneinträge, wobei jeder Listeneintrag durch einen Index identifiziert ist, und wobei jeder Listeneintrag einen Verweis auf einen Knoten einer hierarchisch niedrigeren Knotenebene umfaßt. Die physikalische Adresse ist unter Verwendung eines Listeneintrags eines Knotens einer hierarchisch niedrigsten Knotenebene ermittelbar, entweder als direkte physikalische Adresse, oder, wenn eine seitenweise Adressierung verwendet wird, unter Verwendung der Basisadresse und des Offset-Werts (Versatzwerts) der physikalischen Speicherseite.

Die Länge eines Abschnitts der virtuellen Adresse definiert eine maximale Anzahl von Einträgen einer Knotenliste eines Knotens. Hat ein Abschnitt der virtuellen Adresse eine Länge von z. B. vier Bits, so hat ein Knoten der Knotenebene, der dieser Abschnitt der virtuellen Adresse zugeordnet ist, z. B. maximal 16 Listeneinträge, wenn keine Knotenkompression vorliegt, da 16 verschiedene Indizes für 16 verschiedene Knoteneinträge signalisiert werden können.

Erfindungsgemäß ist ein Knoten ein komprimierter Knoten, dessen Knotenliste eine geringere als die maximale Anzahl von Einträgen aufweist. Die Tatsache und die Art und Weise, wie ein Knoten komprimiert ist, ist durch einen Komprimierungsindikator gegeben, der einen komprimierten Knoten anzeigt.

Bei einem bevorzugten Ausführungsbeispiel der vorliegenden Erfindung werden Komprimierungen von Knoten bevorzugt, die eine Komprimierung auf die Hälfte von Listeneinträgen im Vergleich zur maximalen Anzahl, auf ein Viertel von Listeneinträgen im Vergleich zur maximalen Anzahl, auf ein Achtel von Listeneinträgen im Vergleich zur maximalen Anzahl etc. umfassen. Bevorzugterweise wird eine Komprimierung dann durchgeführt, wenn die höchstwertigen Bits sämtlicher Listeneinträge einer nicht-komprimierten Knotenliste gleich sind. Dann kann eine Komprimierung um die Hälfte erreicht werden, und das höchstwertige Bit des entsprechenden Abschnitts der virtuellen Adresse wird aufgrund des Komprimierungsindikators der Abbildungsvorschrift bei der Indizierung der Knotenliste ignoriert.

Sind ferner die beiden höchstwertigen Bits aller Nicht-Null-Einträge in einer nicht-komprimierten Knotenliste gleich, so wird eine Komprimierung auf ein Viertel der nicht-komprimierten Knotenliste erreicht, und die zwei höchstwertigen Bits des entsprechenden Abschnitts der virtuellen Adresse werden aufgrund des Komprimierungsindikators bei der Indizierung einer Knotenliste ignoriert.

Sind die drei höchstwertigen Bits sämtlicher Nicht-Null-Einträge in einer nicht-komprimierten Knotenliste gleich, so kann eine Komprimierung auf ein Achtel der maximalen Anzahl von Knotenlisteneinträgen erreicht werden, usw.

Zum Abspeichern des Komprimierungsindikators existieren verschiedene Möglichkeiten. Generell muß sichergestellt werden, daß beim Adressen-Übersetzen der Komprimierungsindikator für eine Knotenliste gelesen wird, bevor der Knotenlisteneintrag indiziert wird. Eine bevorzugte Form des Abspeicherns des Komprimierungsindikators besteht darin, denselben in einen Listeneintrag eines Knotens einer höheren Knotenebene zu schreiben, so daß beim Adressübersetzen bereits bei dem Lesen des Listeneintrags einer höheren Knotenebene Kenntnis darüber erhalten werden kann, ob die Knotenliste, auf die durch den gelesenen Listeneintrag verwiesen wird, komprimiert ist, und falls die Komprimierungsart nicht standardmäßig vorgegeben ist, wie dieselbe komprimiert ist. Alternativ kann der Komprimierungsindikator auch in der komprimierten Knotenliste selbst beispielsweise an einer Default-Position stehen, auf die immer zugegriffen wird, bevor dann ein spezieller Eintrag der Knotenliste indiziert wird.

Ein Vorteil der vorliegenden Erfindung besteht darin, daß die komprimierten Knotenlisten weniger physikalischen Speicherplatz benötigen als die nicht-komprimierten Knotenlisten, so daß dieser gewonnene Speicherplatz für andere Daten zur Verfügung steht.

Bei einem bevorzugten Ausführungsbeispiel der vorliegenden Erfindung, bei dem eine Page-weise Adressierungsstruktur verwendet wird, werden die Knotenlisten nicht mehr in einzelnen physikalischen Speicherseiten abgelegt, sondern es werden so viel Knotenlisten als möglich in ein und die dieselbe physikalische Speicherseite abgelegt, so daß der Fall auftritt, daß mehrere Knotenlisten von Knoten ein und derselben Knotenebene in derselben physikalischen Speicherseite angeordnet sind, oder sogar mehrere Knotenlisten von Knoten verschiedener Knotenebenen in derselben physikalischen Speicherseite abgelegt sind. Dies hat den Vorteil, daß der physikalische Speicher "aufgeräumt" ist, so daß nicht nur Teile von Speicherseiten, sondern gesamte Speicherseiten für andere Daten zur Verfügung stehen, welche nicht von der Abbildungsvorschrift eingenommen werden. Damit wird einer Fragmentierung des physikalischen Adressraums entgegengewirkt.

Bei einem bevorzugten Ausführungsbeispiel der vorliegenden Erfindung wird zumindest ein Teil der Abbildungsvorschrift, und insbesondere lediglich der Wurzelknoten selbst oder sogar nur ein Verweis auf denselben und eine Erzeugungsvorschrift für die Abbildungsvorschrift unter Verwendung des Verweises in einem nicht-flüchtigen Speicher abgespeichert, so daß das Rechnersystem mit der erfindungsgemäßen Adressierung bereits im virtuellen Modus hochfahren kann.

Gemäß einem bevorzugten Ausführungsbeispiel wird die Sicherheit eines Rechnersystems mit virtueller Adressierung dadurch verbessert, daß das Rechnersystem keinen physikalischen Adressierungsmodus verwendet, sondern von vorneherein im virtuellen Adressierungsmodus arbeitet. Um dies zu erreichen, wird in einem nicht-flüchtigen Speicher des Rechnersystems die hierarchische Abbildungsvorschrift abgespeichert, mittels der aus einer virtuellen Adresse eine physikalische Adresse ermittelt werden kann. Die Abbildungsvorschrift wird im nicht-flüchtigen Speicher gespeichert, so daß dieselbe unmittelbar beim Hochfahren des Rechnersystems vorhanden ist und nicht erst, wie im Stand der Technik, in einem realen Modus erzeugt und im flüchtigen Speicher abgespeichert werden muß. Damit wird auch der komplette Verwaltungsaufwand und die dafür erforderlichen Programme, um eine Abbildungsvorschrift beispielsweise in Form einer Hash-Tabelle zu erzeugen, hinfällig, da die Abbildungsvorschrift bereits im nicht-flüchtigen Speicher fertig verfügbar ist.

Damit das Rechnersystem bereits im virtuellen Adressierungsmodus hochfahren kann, wird neben dem nicht-flüchtigen Speicher, in dem die Abbildungsvorschrift gespeichert ist, eine Hardware-Zustandsmaschine vorgesehen, die auf den nicht-flüchtigen Speicher zugreifen kann und ausgebildet ist, um unter Verwendung der virtuellen Adresse und der Abbildungsvorschrift die der virtuellen Adresse zugeordnete physikalische Adresse zu ermitteln. Die Hardware-Zustandsmaschine führt, wie es bei Zustandsmaschinen üblich ist, einen fest vorgegebenen Algorithmus selbsttätig aus, wobei der Algorithmus, den die Hardware-Zustandsmaschine ausführt, einerseits Eingangsdaten von dem nicht-flüchtigen Speicher erhält und andererseits die virtuelle Adresse als Eingangsdaten, um als Ausgangsdaten die physikalische Adresse auszugeben.

Erfindungsgemäß wird es jedoch bevorzugt, die Abbildungsvorschrift in Form eines hierarchischen Baums mit einem Wurzelknoten für eine Wurzelebene, zumindest einem Zwischenknoten für zumindest eine Zwischenebene und einem Endknoten für eine Endebene zu speichern, so daß die Hardware-Zustandsmaschine, gesteuert von der virtuellen Adresse und von in dem nicht-flüchtigen Speicher abgespeicherten Listen für die einzelnen Knoten einen sogenannten Page Table Walk ("Seitentabellenspaziergang") durchführt, um nach Durchlaufen des Baumes die physikalische Adresse auszugeben, die der eingegebenen virtuellen Adresse entspricht. Bei einem bevorzugten Ausführungsbeispiel der vorliegenden Erfindung, bei dem der virtuellen Adressraum wesentlich größer als der physikalischen Adressraum ist, und somit Listen für Knoten relativ wenige benutzte Einträge und dagegen relativ viele Null-Einträge aufweisen, werden die Listen für Knoten des hierarchischen Baums komprimiert, um Speicherplatz im nicht-flüchtigen Speicher zu sparen.

Im Falle der hierarchisch organisierten Abbildungsvorschrift zwischen virtueller und physikalischer Adresse muß nicht die ganze Abbildungsvorschrift im nicht flüchtigen Speicher gespeichert werden, sondern wenigstens der Teil der Abbildungsvorschrift, durch den es möglich ist, einen Hochfahrvorgang des Systems im virtuellen Modus zu beginnen. Bei geeigneten Listeneinträgen im virtuellen Modus ist es dann möglich, bereits beim Wiedergewinnen der benötigten Daten aus dem physikalischen Speicher im flüchtigen Arbeitsspeicher den restlichen Teil der Abbildungsvorschrift zu erzeugen und für weitere Adressübersetzungen von virtuell zu physikalisch zu verwenden. Die Hardware-Zustandsmachine kann daher nach dem Hochfahren des Systems im virtuellen Modus durchaus auch auf zur Laufzeit im flüchtigen Speicher programmierte Daten zugreifen.

Bei einem bevorzugten Ausführungsbeispiel der vorliegenden Erfindung wird ferner eine seitenweise Adressierung bevorzugt. Um eine Speicherfragmentierung zu vermeiden, werden in diesem Fall so viel als möglich kombinierte Listen in ein und derselben physikalischen Seite abgespeichert.

Ein weiterer Vorteil der vorliegenden Erfindung besteht darin, daß im Falle der Abbildungsvorschrift als hierarchische Baumstruktur durch Implementieren von Zugriffsrechten an dem Knoten des Baumes eine differenzierte Zugriffsrechtevergabe mit einer einstellbaren Granularität erreicht werden kann.

Ein weiterer Vorteil der vorliegenden Erfindung besteht darin, daß durch Abspeichern der Abbildungsvorschrift im nicht-flüchtigen Speicher, und zwar in einer Form, wie sie von der Hardware-Zustandsmaschine ohne Einschaltung der CPU verwendet werden kann, CPU-Ressourcen gespart werden. Selbstverständlich muß die Abbildungsvorschrift, beispielsweise die Page Table oder die hierarchische Struktur von Knotenlisten erstellt werden. Dies kann jedoch außerhalb des Betriebs des Rechnersystems gewissermaßen "Off-Line" bzw. im Falle einer Chipkarte "Off-Card" durchgeführt werden. Das Erstellen der Abbildungsvorschrift und das Abspeichern der Abbildungsvorschrift im nicht-flüchtigen Speicher nimmt somit keine wertvolle On-Line-Ressource an Speicher oder CPU in Anspruch, sondern kann, wenn genügend Zeit ist, beispielsweise bei der Herstellung der Chipkarte oder im Falle einer dynamischen Modifikation der Abbildungsvorschrift dann vorgenommen werden, wenn das Rechnersystem gerade keine sicherheitsrelevante Anwendung durchführt. Erfindungsgemäß können daher Bearbeitungsschritte aus dem On-Line-Betrieb heraus verlagert werden, um wertvolle Online-Ressourcen, wie z. B. Rechnerleistung, Speicherplatz, Energieverbrauch etc., frei zu machen bzw. einzusparen.

Bevorzugte Ausführungsbeispiele der vorliegenden Erfindung werden nachfolgend bezugnehmend auf die beiliegenden Zeichnungen detailliert erläutert. Es zeigen:
- Fig. 1: ein Rechnersystem mit virtueller Adressierung;
- Fig. 2: eine schematische Darstellung einer Abbildung eines virtuellen Adressraums in einen physikalischen Adressraum für ein Rechnersystem auf einer Chipkarte;
- Fig. 3: eine Übersichtsdarstellung einer Adressübersetzung unter Verwendung einer Page Table;
- Fig. 4a: eine schematische Darstellung einer Adressübersetzung unter Verwendung einer Abbildungsvorschrift in Form einer hierarchischen Baumstruktur;
- Fig. 4b: eine Tabelle zur Darstellung der Knotenebenen und der durch einen Knoten adressierten Adressbereiche;
- Fig. 5: ein Beispiel für eine Abbildungsvorschrift in Form einer hierarchischen Baumstruktur, bei der Zwischenknoten übersprungen werden können;
- Fig. 6: eine Tabelle zur Darstellung von Knotengrößen auf verschiedenen Ebenen für das Beispiel von Fig. 4a;
- Fig. 7: ein Beispiel für eine Abbildungsvorschrift in Form eines n-Baums mit gleichen Größen für zusätzliche Knoten einer Ebene;
- Fig. 8: eine schematische Darstellung eines Kompressionsverfahrens für Knotenlisten, um das Verhältnis von benutzten Einträgen zu der Gesamtzahl der Einträge einer Liste zu verbessern;
- Fig. 9: Kompressionsbeispiele gemäß dem Kompressionsverfahren von Fig. 8;
- Fig. 10: eine komprimierte Darstellung des Baums von Fig. 7;
- Fig. 11: eine Speicherplatz-optimierte Abspeicherung des Baums von Fig. 10;
- Fig. 12: eine Darstellung einer virtuellen Adresse, die modifiziert ist, um auf eine physikalische Adresse zu verweisen, an der eine Knotenliste abgespeichert ist; und
- Fig. 13: ein Blockschaltbild einer erfindungsgemäßen Vorrichtung zum Ermitteln einer physikalischen Adresse aus einer virtuellen Adresse unter Verwendung einer hierarchischen Abbildungsvorschrift.

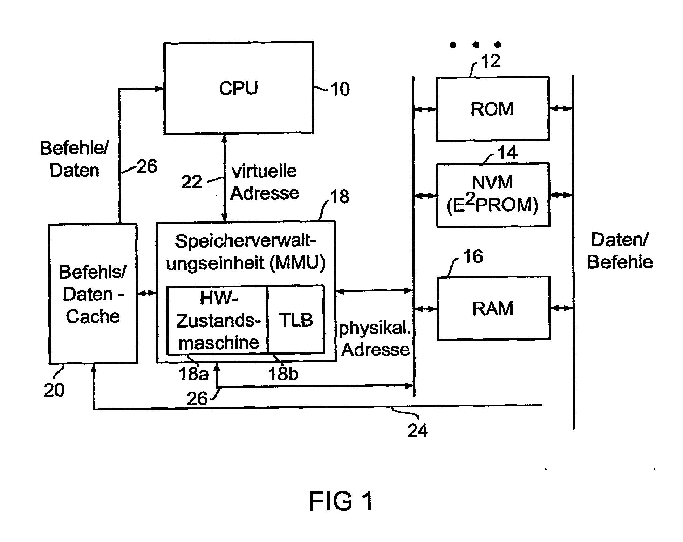

Fig. 1 zeigt ein Rechnersystem mit einer CPU 10, einem nicht-flüchtigen Speicher in Form eines ROM 12 und eines E²PROM 14, der in Fig. 1 auch als NVM (NVM = non volatile memory) bezeichnet wird. Das Rechnersystem kann ferner einen flüchtigen Speicher 16, der in Fig. 1 mit RAM bezeichnet ist, und gegebenenfalls weitere Peripheriekomponenten, wie z. B. einen Coprozessor, eine Eingabe/Ausgabe-Schnittstelle, einen Zufallszahlengenerator etc. umfassen.

Das Rechnersystem weist ferner eine Speicherverwaltungseinheit (MMU; MMU = Memory Management Unit) 18 sowie einen Cache 20 auf, wobei der Cache 20 in einen Befehls-Cache und einen Daten-Cache aufgeteilt sein kann, wenn das Rechnersystem gemäß der Harvard-Architektur aufgebaut ist. Die CPU ist über einen Bus 22 für virtuelle Adressen mit der Speicherverwaltungseinheit 18 verbunden. Die Speicherverwaltungseinheit 18 umfaßt eine Hardware-Zustandsmaschine 18a sowie vorzugsweise einen Translation-Look-Aside-Buffer (TLB) 18b, um aus einer von der CPU 10 über den Bus 22 gelieferten virtuellen Adresse eine physikalische Adresse zu ermitteln, um die einer virtuellen Adresse zugeordneten Daten von einem Speicher 12, 14, 16 zu adressieren und über einen Daten/Befehle-Bus 24 in den Cache 20 zu laden, aus dem die CPU 10 über einen weiteren Befehle/Daten-Bus 26 die einer virtuellen Adresse zugeordneten Daten erhält.

Aus Fig. 1 ist ferner zu sehen, daß die Hardware-Zustandsmaschine 18a der Speicherverwaltungseinheit 18 über einen Zugriffsbus 26 auf einen nicht-flüchtigen Speicher in Form des ROM 12 oder des NVM 14 zugreifen kann, um die Abbildungsvorschrift, die zur Berechnung der physikalischen Adresse aus der virtuellen Adresse erforderlich ist, aus dem nicht-flüchtigen Speicher zu laden. Die Hardware-Zustandsmaschine 18a kann somit über den Zugriffsbus 26 auf den nicht-flüchtigen Speicher zugreifen, um unter Verwendung einer virtuellen Adresse und der in dem nicht-flüchtigen Speicher gespeicherten Abbildungsvorschrift die der virtuellen Adresse zugeordnete physikalischen Adresse zu ermitteln.

Aus Fig. 1 ist ersichtlich, daß die CPU 10 vorzugsweise ausschließlich über den virtuellen Adressbus 22 adressiert, und zwar insbesondere die Hardware-Zustandsmaschine 18a adressiert, die direkt auf den nicht-flüchtigen Speicher zugreifen kann, so daß das Rechnersystem keinen physikalischen Adressierungsmodus benötigt, sondern im virtuellen Adressierungsmodus hochfahren kann, so daß es keinen Angriffspunkt in Form eines im physikalischen Adressierungsmodus laufenden Betriebssystems des Rechnersystems gibt.

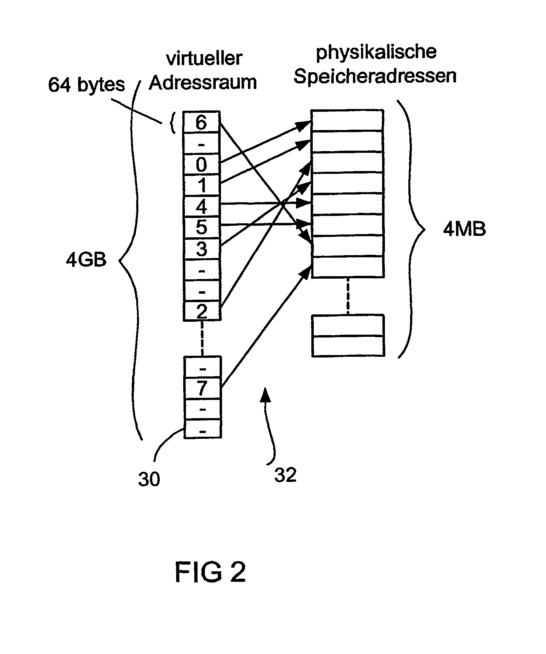

Im nachfolgenden wird allgemein auf virtuelle Speichersysteme eingegangen. Ein Schutzmechanismus für Multitasking-Rechnersysteme besteht darin, daß separaten Prozessen oder Anwendungen voneinander getrennte virtuelle Adressräume zugeordnet werden, so daß ein Multitasking-Betrieb mit verschiedenen Anwendungen möglich ist, wobei diese Anwendungen jedoch aus Sicherheitsgründen vollständig voneinander getrennt sein müssen. Bei einem bevorzugten Ausführungsbeispiel des Rechnersystems, das für eine Chipkarte geeignet ist, wird ein virtueller Adressraum von 4 Gigabyte bereitgestellt, wie es in Fig. 2 zu sehen ist. Der Adressraum wird aus Gründen der besseren Effizienz in virtuellen Speicherseiten 30 aufgeteilt, wobei eine Speicherseite eine Größe von 64 Byte, also 512 Bits hat. Die Speicherseiten des virtuellen Adressraums können durch eine 32 Bit breite virtuelle Adresse adressiert werden.

Wesentlich am Konzept der virtuellen Adressierung ist, daß eine Anwendung, die auf der CPU läuft, nicht direkt auf den physikalischen Speicher zugreifen kann, sondern nur auf ihren eigenen virtuellen Adressraum. Unter Verwendung der Speicherverwaltungseinheit 18 von Fig. 1 wird der virtuelle Adressraum unter Verwendung einer Abbildungsvorschrift 32, die durch die in Fig. 2 gezeigten Pfeile symbolisiert ist, in physikalische Speicheradressen abgebildet. Bei dem in Fig. 2 gezeigten Ausführungsbeispiel ist der physikalische Adressraum auf 4 MB festgelegt, wobei jedoch darauf hingewiesen wird, daß eine übliche Chipkarte bei weitem nicht so viel Speicher hat. Typische Speichergrößen für das E²PROM 14 von Fig. 1 sind 64 kByte. Der RAM 16 von Fig. 1 hat typischerweise 8 kByte, während der ROM 12 von Fig. 1 typischerweise 168 Kbyte hat. Wenn ein virtueller Adressraum von 4 GB auf etwa 240 kByte Speicherzellen abgebildet wird, so ist zu sehen, daß zunächst eine große Menge virtueller Adressen nicht in physikalische Speicheradressen abgebildet werden muß, und daß zusätzlich auch eine große Anzahl von physikalischen Speicheradressen nicht auf tatsächlich vorhandene physikalische Speicherzellen zeigen. Andererseits erlaubt die Überdimensionierung des virtuellen Adressraums gegenüber dem physikalischen Adressraum und die Überdimensionierung des physikalischen Adressraums bezüglich der tatsächlich vorhandenen Speicherzellen einfache Modifikationen dahingehend, daß zusätzliche Speicher ohne weiteres nachträglich eingefügt werden können bzw. daß der physikalische Adressraum je nach Notwendigkeit erweitert werden kann.

Wie es später noch erläutert werden wird, wird die Abbildungsvorschrift 32 nicht von der CPU im RAM 16 aufgebaut, sondern beispielsweise bei der Herstellung der Chipkarte entwickelt und in dem ROM 12 in Form einer entsprechend gestalteten ROM-Maske einprogrammiert, bevor das Rechnersystem in Betrieb genommen wird. Im Betrieb benötigt das Rechnersystem daher abgesehen von der Zustandsmaschine keinerlei Ressourcen zum Erzeugen der Abbildungsvorschrift 32. Die dafür erforderlichen Schritte wurden bereits Off-Line ausgeführt, um nicht wertvolle On-Line-Kapazitäten des Rechnersystems hierzu in Anspruch nehmen zu müssen.

Eine virtuelle Adresse wird in eine entsprechende physikalischen Adresse z. B. unter Verwendung einer Übersetzungstabelle übersetzt, die üblicherweise als Page Table bezeichnet wird. Die Page Table kann in Form einer einzigen Tabelle organisiert sein, die Einträge hat, wobei jeder Eintrag eine virtuelle Adresse und die derselben zugeordnete physikalische Adresse umfaßt. Wie später ausgeführt wird, wird es jedoch bevorzugt, die Abbildungsvorschrift in Form eines hierarchischen Seitenzuordnungsbaums zu organisieren. Eine solchermaßen organisierte Abbildungsvorschrift hat den Vorteil größerer Flexibilität zum Verwalten von Zugriffsrechten. Dieselbe ist ferner besser geeignet, um kleine Seitengrößen handzuhaben, was dann von Bedeutung ist, wenn das Rechnersystem als Sicherheits-IC in einer Chipkarte verwendet wird. Kleine Seitengrößen, z. B. kleiner oder gleich 256 Byte, dienen ferner dazu, eine Seitentabellen-Fragmentierung zu vermeiden. Eine Speicherseite hat daher, wie es bezugnehmend auf Fig. 2 ausgeführt worden ist, z. B. eine Größe von 64 Byte, d. h. 512 Bit. Dies bedeutet, daß der Seiten-Offset, um die 64 Byte ausgehend von der Startadresse für die Seite adressieren zu können, eine Länge von 6 Bits haben muß.

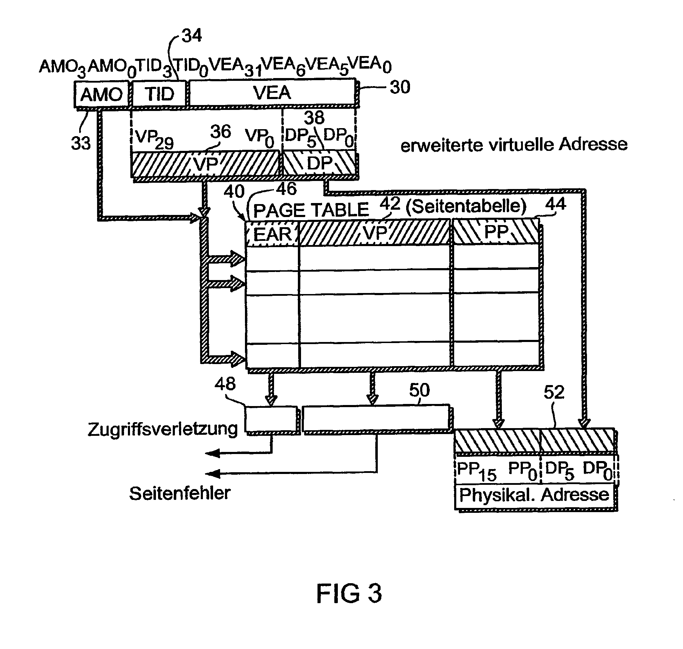

Im nachfolgenden wird auf Fig. 3 Bezug genommen. Fig. 3 zeigt eine schematische Darstellung einer Adressübersetzung, bei der eine Page Table verwendet wird. Eine virtuelle Adresse 30, ein AMO-Feld 32 und ein TID-Feld 34 werden als Eingabe verwendet. Das AMO-Feld 32 bezeichnet den Zugriffs-Modus, der durch den gegenwärtigen Zustand der CPU und den beabsichtigten Zugriffstyp (Lesen, Schreiben, Ausführen, etc.) eingestellt wird. Das TID-Feld 34 wird beim Multitasking-Betrieb benötigt und liefert einen Aufgaben-Identifizierer (Task Identifier), der darauf hinweist, welcher Aufgabe die virtuelle Adresse 30 zugeordnet ist, um verschiedene virtuelle Adressräume verschiedener Anwendungen unterscheiden zu können. Aus der virtuellen Adresse 30 und dem TID-Feld 34 wird die sogenannten erweiterte virtuelle Adresse erhalten, die die Startadresse für die virtuelle Seite (VP 36) und einen Versatzwert (DP 38) aufweist.

Die Zuordnungsvorschrift in Form einer Seitentabelle 40 umfaßt verschiedene Einträge, wobei jeder Eintrag eine Spalte 42 für die Startadresse der virtuellen Seite und eine Spalte 44 für die Startadresse der physikalischen Seite, die der in der Spalte 42 stehenden virtuellen Seite zugeordnet ist, aufweist. Die Seitentabelle umfaßt ferner eine Spalte 46 für Zugriffsrechte (EAR; EAR = Effective Access Rights), wobei anhand eines Rechtemoduls 48 überprüft wird, ob der durch das AMO-Feld 32 festgelegte CPU-Modus Zugriff auf eine virtuelle Adresse mit einem bestimmten EAR-Feld hat. Wird festgestellt, daß die CPU keinen Zugriff auf eine virtuelle Adresse hat, so wird die Adressübersetzung verweigert, und es wird eine Zugriffsverletzung ausgegeben. Die CPU kann daher, da die Zugriffsrechteüberprüfung vor der Adressübersetzung, also im virtuellen Adressraum, stattfindet, nicht einmal die physikalische Adresse geschweige denn den Inhalt der Speicherzelle, die durch die physikalische Adresse adressiert ist, erhalten. In der Seitentabelle wird eine assoziative Suche durchgeführt, um die Abbildung der virtuellen Adresse auf die physikalische Adresse zu liefern. Die virtuelle Adresse in der Seitentabelle muß mit dem Feld 36 der erweiterten virtuellen Adresse übereinstimmen. Wird kein derartiger Eintrag in der Seitentabelle gefunden, so wird durch ein Modul 50 ein Seitenfehler ausgegeben. Wird dagegen ein passender Eintrag gefunden, so wird aus der Spalte 44 die physikalische Seitenadresse ausgelesen. Eine virtuelle Seite kann genau so groß wie eine physikalische Seite sein. Dann sind der Versatz der virtuellen Adresse (DP 38) und der Versatz 52 der physikalischen Adresse gleich groß, so daß keine Speicherung von Versatzwerten in der Page Table bzw. eine spezielle Verarbeitung von Versatzwerten nötig ist.

Wie es bereits bezugnehmend auf Fig. 1 ausgeführt worden ist, umfaßt die Speicherverarbeitungseinheit 18 vorzugsweise einen TLB, um eine schnellere Adressierung zu erreichen. Die anhand von Fig. 3 beschriebene Seitentabelle wird in dem TLB gehalten, wobei der TLB optional zusätzlich zur Hardware-Zustandsmaschine 18a vorhanden ist. Der TLB ist in Form der in Fig.3 gezeigten Cache-Tabelle ausgestaltet und umfaßt eine Liste von virtuellen Adressen mit entsprechenden physikalischen Adressen für einen schnellen Zugriff. Der TLB wird mit den zuletzt verwendeten Adressenpaaren gefüllt und kann entweder zufällig oder nach zeitlichen Gesichtspunkten aktualisiert werden. Eine Möglichkeit besteht beispielsweise darin, daß, sobald der TLB aufgefüllt ist, und eine neuer Eintrag hinzugefügt werden soll, der älteste Eintrag gelöscht wird, um Platz für einen neuen Eintrag zu machen. Die Größe des TLB ist ein Hardware-Faktor und kann daher je nach Ausführungsform spezifisch gewählt werden.

Sind die Hardware-Ressourcen beispielsweise aufgrund des benötigten Chipplatzes begrenzt, so wird der TLB nicht all zu groß ausgestaltet sein, und die Hardware-Zustandsmaschine wird öfters aktiviert werden, während in anderen Fällen, bei denen der TLB sehr groß gehalten werden kann, die Hardware-Zustandsmaschine lediglich zu Beginn aktiv ist, wenn der TLB, der ein flüchtiger Puffer ist, noch leer ist, um den TLB nach und nach aufzufüllen.

Insbesondere aufgrund von Größenbegrenzungen für den TLB können oftmals nicht alle virtuellen Seiten mittels des TLB auf ihre entsprechenden physikalischen Seiten abgebildet werden. Darüber hinaus müssen aufgrund der starken Überdimensionierung des virtuellen Adressraums gegenüber dem physikalischen Adressraum nicht alle virtuellen Seiten auf physikalische Seiten abgebildet werden, sondern es müssen lediglich virtuelle Adressen für die physikalischen Adressen vorhanden sein, an denen tatsächlich Code oder Daten für die tatsächlich laufenden Tasks einer Multitasking-Umgebung gespeichert sind. Wenn eine virtuelle Seite nicht auf eine physikalische Seite abgebildet wird, die entweder nicht vorhanden ist, oder die auf keine tatsächlich vorhandene physikalische Speicherzelle zeigt, so wird ein Seitenfehler ausgegeben, was darauf hinweist, daß die virtuelle Adresse beschädigt war, oder daß bei der Adressübersetzung ein Fehler aufgetreten ist.

Falls im TLB kein Eintrag mit einer entsprechenden virtuellen Adresse gefunden wird, so wird die Hardware-Zustandsmaschine 18a von Fig. 1 aktiviert, um eine virtuelle Adresse, die im TLB nicht gefunden worden ist, in eine physikalische Adresse umzurechnen, um die physikalische Adresse zusammen mit ihrer virtuellen Adresse in den TLB zu laden. Zu diesem Zweck wird, wie es ausgeführt worden ist, die Hardware-Zustandsmaschine auf den nicht-flüchtigen Speicher (z. B. 12 oder 14 von Fig. 1) zugreifen, um unter Verwendung der dort gespeicherten Abbildungsvorschrift die physikalische Adresse zu ermitteln.

Erfindungsgemäß wird als Abbildung eine hierarchische Baumstruktur mit physikalisch adressierten Knoten bevorzugt. Eine solche hierarchische Baumstruktur, die auch als Multilevel-Seitentabellen-Abbildungsvorschrift bezeichnet werden kann, hat den Vorteil, daß nicht eine große Seitentabelle im nicht-flüchtigen Speicher gehalten werden muß, sondern daß statt einer großen Tabelle mehrere Ebenen oder Levels mit kleineren Listen eingesetzt werden können. Dies erlaubt eine effizientere Verwaltung insbesondere bei kleinen physikalischen Speicherseiten.

Die Hardware-Zustandsmaschine 18a ist dann in der Lage, die hierarchische Baumstruktur von Knoten zu Knoten zu durchlaufen, um schließlich eine physikalische Adresse zu einer gegebenen virtuellen Adresse zu ermitteln. Dieser Prozeß wird als "Page Table Walking" bezeichnet.

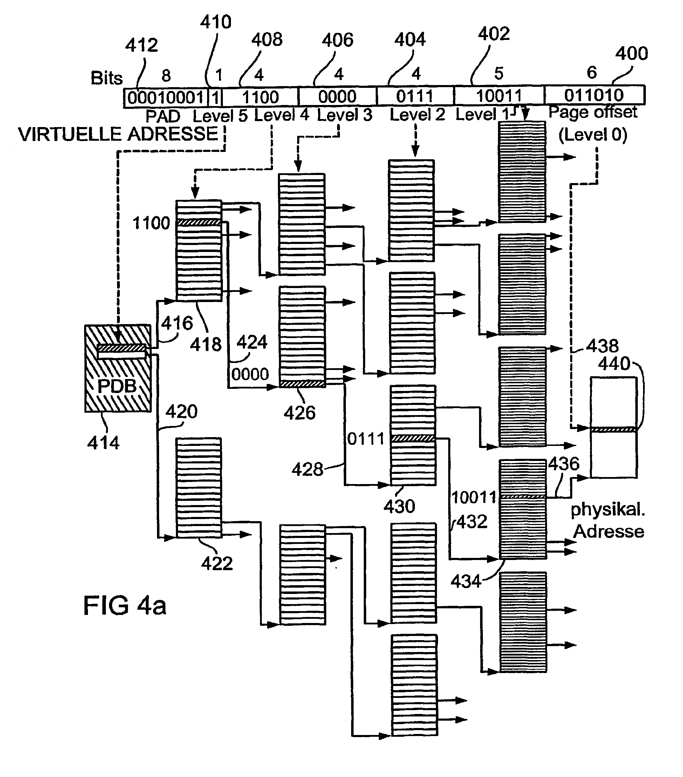

Ein solcher Vorgang wird anhand von Fig. 4a beschrieben. In Fig. 4a ist eine virtuelle Adresse 400 gezeigt, die verschiedene Abschnitte 402 bis 310 aufweist. Der Abschnitt 410 ist einer Wurzelebene, d. h. der höchsten Ebene, zugeordnet. Der Abschnitt 408 ist der nächsthöheren Ebene, im Beispiel der Ebene 4, zugeordnet. Der Abschnitt 406 der virtuellen Adresse 400 ist entsprechend der Ebene 3 zugeordnet. Der Abschnitt 404 ist der Ebene 2 zugeordnet, während der Abschnitt 402 der Ebene 1, d. h. dem Endknoten, zugeordnet ist. Der letzte Abschnitt der physikalischen Adresse, der auch als Abschnitt für die Ebene 0 bezeichnet werden kann, enthält den SeitenVersatz, der in Fig. 3 mit dem Bezugszeichen 38 bezeichnet ist. Die virtuelle Adresse umfaßt ferner eine sogenannten Package-Adresse 412, die ein Speicher-Package adressiert. Bei dem bevorzugten Ausführungsbeispiel ist der virtuelle Adressraum in 256 gleich große Packages aufgeteilt, so daß jede Package einen Adressraum von 16 MB hat. Damit ist es beispielsweise möglich, für verschiedene Speicher-Packages des virtuellen Adressraum verschiedene Zugriffsrechte zu vergeben.

Der Abschnitt 410 der virtuellen Adresse 400, der bei einem bevorzugten Ausführungsbeispiel lediglich 1 Bit umfaßt, ist einem Wurzelknoten der hierarchischen Baumstruktur zugeordnet.

Die Liste für den Wurzelknoten kann im nicht-flüchtigen oder in Registern der Speicherverwaltungseinheit gespeichert sein. Alternativ kann die Liste für den Wurzelknoten auch an einem fest vereinbarten Platz in dem physikalischen Speicher abgelegt sein.

Die Liste für den Wurzelknoten wird als Package-Descriptor-Buffer 414 bezeichnet und umfaßt aufgrund der Tatsache, daß der Abschnitt 410 der virtuellen Adresse 400 lediglich ein Bit hat, lediglich zwei Listeneinträge. Ein Eintrag in der Wurzel-Liste 414 umfaßt einen Index, der durch das Bit des Abschnitts 410 der virtuellen Adresse indexiert ist. Hat das Bit im Abschnitt 410 einen Wert von Eins, wie es bei dem in Fig. 4a bezeichneten Beispiel der Fall ist, so wird der erste Eintrag der Liste 414 ausgewählt. Der Eintrag umfaßt ferner einen Zeiger 416 auf die physikalische Adresse der Seite im nicht-flüchtigen Speicher, an der eine Liste 418 für den ersten Zwischenknoten gespeichert ist, dem der Abschnitt 408 der virtuellen Adresse 400 zugeordnet ist. Ist das Bit in dem Abschnitt 410 der virtuellen Adresse dagegen eine Null, so wird der zweite Eintrag der Liste 414 ausgewählt, der einen Zeiger 420 auf die physikalische Adresse einer Speicherseite im nicht-flüchtigen Speicher umfaßt, in der eine weitere Liste 422 für den ersten Zwischenknoten gespeichert ist, dem der Abschnitt 408 der virtuellen Adresse 400 zugeordnet ist. Nachdem der Abschnitt 408 der virtuellen Adresse vier Bits umfaßt, haben die Listen 418 und 422 für den ersten Zwischenknoten jeweils 16 Einträge. Jeder Eintrag hat eine Länge von 32 Bits, so daß bei dem in Fig. 4a gezeigten Ausführungsbeispiel jede Liste genau eine Speicherseite im nicht-flüchtigen Speicher in Anspruch nimmt.

Nachdem die Hardware-Zustandsmaschine den oberen Eintrag der Wurzelliste 414 aufgrund des Abschnitts 410 der virtuellen Adresse 400 ermittelt hat, kann die Hardware-Zustandsmaschine aufgrund des Zeigers 416 unmittelbar auf die physikalische Speicherseite zugreifen, in der die Liste 418 für den ersten Zwischenknoten gespeichert ist. Die Hardware-Zustandsmaschine liest dann den Abschnitt 408 der virtuellen Adresse 400 ein und wählt aufgrund der Tatsache, daß der Abschnitt den Wert "1100" hat, den dreizehnten Eintrag in der Liste 418 aus.

Der dreizehnte Eintrag umfaßt neben einem Eintragsindex wieder einen Zeiger 424 auf eine Liste 426 für einen weiteren Zwischenknoten, dem der Abschnitt 406 der virtuellen Adresse 400 zugeordnet ist.

Die Hardware-Zustandsmaschine liest dann den Abschnitt ein und wählt den ersten Eintrag der Liste 426 aus, da der Abschnitt 406 den Wert "0000" hat.

Der erste Eintrag in der Liste 426 enthält wiederum einen Zeiger 428 auf eine Liste 430, die einem weiteren Zwischenknoten mit niedrigerer Hierarchie zugeordnet ist. Die Hardware-Zustandsmaschine liest nun den Abschnitt 404 der virtuellen Adresse 400 ein und wählt den achten Eintrag dieser Liste aus, da der Wert des Abschnitts 404 "0111" beträgt.

Der ausgewählte Eintrag der Liste 430 enthält wiederum einen Zeiger 432 auf eine physikalische Adresse der physikalischen Seite im nicht-flüchtigen Speicher, in der eine Liste 434 für einen Endknoten, der dem Abschnitt 402 der virtuellen Adresse 400 zugeordnet ist, gespeichert ist. Die Hardware-Zustandsmaschine liest nun den Abschnitt 402 der virtuellen Adresse ein und wählt aus der Liste 434 aufgrund der Tatsache, daß der Wert des Abschnitts 402 "10011" beträgt, den zwanzigsten Eintrag der Liste 434 aus. Da der Abschnitt 402 der virtuellen Adresse 400 der End-Ebene zugeordnet ist, enthält der ausgewählte Eintrag der Liste 434 für den Endknoten einen Zeiger 436 auf die physikalische Adresse der physikalischen Seite, die der virtuellen Startadresse der virtuellen Seite entspricht. Zu der physikalischen Adresse, auf die der Zeiger 436 zeigt, muß nun lediglich noch der Seitenversatz hinzugefügt werden, wie es durch einen gestrichelten Pfeil 438 in Fig. 4a symbolisch dargestellt ist, um die physikalische Adresse 440 zu erhalten, die der virtuellen Adresse 400 zugeordnet ist.

Es sei darauf hingewiesen, daß das in Fig. 4a beschriebene Konzept ebenso verwendet werden kann, wenn keine seitenweise Speicherorganisation eingesetzt wird, sondern eine direkte Adressierung von Speicherzellen ohne Seitenadresse und Versatzwert. In diesem Fall würde einfach der letzte Schritt, der durch den Pfeil 438 in Fig. 4a dargestellt ist, entfallen.

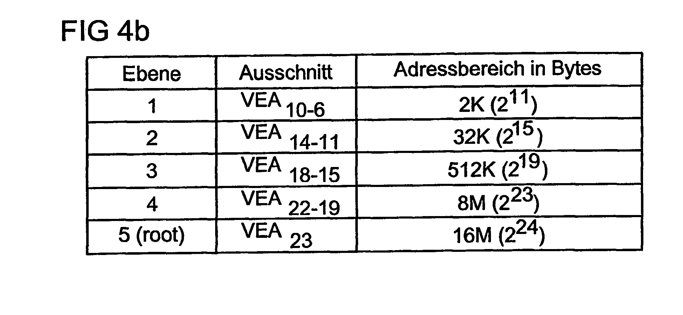

Wie es bereits ausgeführt worden ist, ist der virtuelle Adressraum wesentlich größer als der physikalische Adressraum. Aus diesem Fall existieren in den in Fig. 4 gezeigten Listen für die verschiedenen Knoten viele Einträge, die auf keinen nächst-niedrigeren Knoten verweisen. In Fig. 4a sind dies sämtliche Einträge, die keinen Ausgangs-Zeiger enthalten. Diese Einträge werden auch als Null-Einträge bezeichnet. Aufgrund der Übersichtlichkeit der Darstellung wurde bei sämtlichen Zeigern, die in Fig. 4a ins Leere zeigen, die denselben zugeordneten Listen weggelassen. Eine vollständige Abbildungsvorschrift würde jedoch zu jedem Zeiger in Fig. 4a eine entsprechende Liste umfassen.

Abgesehen von dem PAD-Abschnitt 412 wird bei dem in Fig. 4a gezeigten Ausführungsbeispiel die virtuelle Adresse 400 in sechs Teile oder Abschnitte aufgeteilt. Jedem Abschnitt ist eine Ebene in dem Adressübersetzungsprozeß, der durch die Hardware-Zustandsmaschine ausgeführt wird, zugeordnet. Die höchste Ebene, d. h. Ebene 5, indexiert, wie es ausgeführt worden ist, einen von zwei Einträgen in der Liste 414. Selbstverständlich könnte auch die Liste 414 mehrere Einträge enthalten. In diesem Fall müßte der Abschnitt 410 der virtuellen Adresse 40 dementsprechend mehr Bit haben. Mit zwei Bits könnten bereits vier Einträge in der Liste 414 vorhanden sein.

Fig. 4b zeigt den Adressbereich, der durch jede Ebene gewissermaßen adressiert werden kann. Durch die Wurzel-Liste 414 (letzte Zeile der Tabelle in Fig. 4b) können die gesamten 16 Megabyte des virtuellen Adressraum adressiert werden, wobei der obere Zeiger 416 die oberen acht Megabyte auswählt, während der untere Zeiger 420 die unteren acht Megabyte auswählt. Daher kann durch die Liste 418 bzw. analog dazu durch die Liste 422 jeweils ein physikalischer Adressraum von acht Megabyte adressiert werden, wobei jeder Eintrag der Liste 418, d. h. jeder Pfeil, der aus der Liste 418 heraus zeigt, 512 Kilobyte adressieren kann. Jeder Zeiger aus der Liste 418 zeigt nämlich auf eine Liste 426 der dritten Ebene (dritte Zeile der Tabelle von Fig. 4b). Analog dazu kann wieder jeder Zeiger aus einer Liste der dritten Ebene, wie z. B. der Zeiger 428, wieder einen Adressbereich von 32 Kilobyte adressieren. Der Adressbereich von 32 Kilobyte ist der Adressbereich, der durch die Liste 430 der zweiten Ebene umspannt wird, wobei ein Eintrag in dieser Liste wiederum einen Adressbereich von zwei Kilobyte adressieren kann.

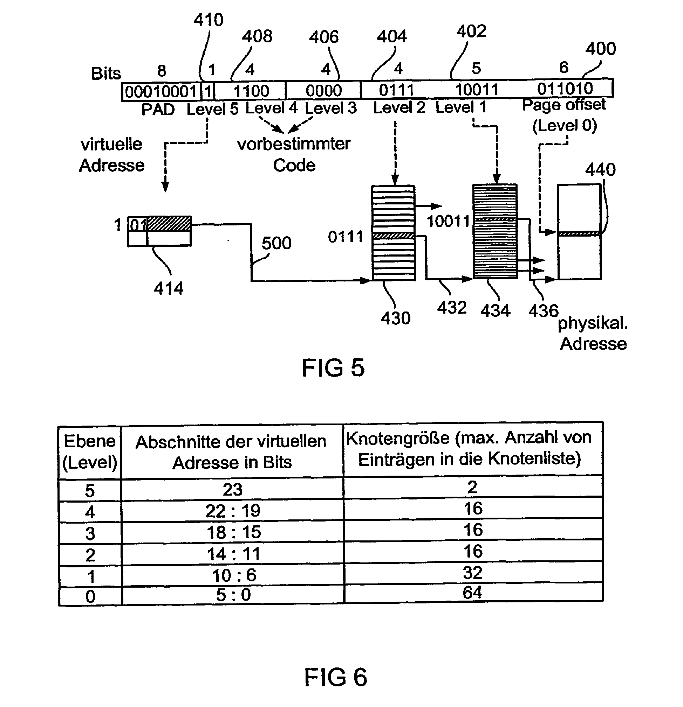

Fig. 5 zeigt einen Ausschnitt aus der hierarchischen Page Table Struktur von Fig. 4a, jedoch mit einer anderen virtuellen Adresse, die in den Abschnitten 408 und 406 für die vierte Ebene und für die dritte Ebene jeweils lauter Einsen hat. Die Abbildungsvorschrift in Form des hierarchischen Baums, der mit der Wurzelliste 414 beginnt und mit der physikalischen Adresse 440 endet, erlaubt im Gegensatz zu der in Fig. 4a gezeigten Abbildungsvorschrift ein Überspringen von mindestens einer Ebene. Das Überspringen einer Ebene wird in der virtuellen Adresse durch einen bestimmten Abschnitt signalisiert, beispielsweise dadurch, daß in einem Abschnitt lauter Einsen stehen, wie es in Fig. 5 der Fall ist. Für das Überspringen einer Ebene könnte jedoch auch jeder andere vorbestimmte Code reserviert sein. Der Zeiger, der von der Wurzelliste 414 ausgeht und in Fig. 5 mit 500 bezeichnet ist, zeigt nun nicht mehr auf eine Liste der vierten Ebene oder der dritten Ebene, sondern gleich auf die Liste 430 der zweiten Ebene. Ein Überspringen einer beliebigen Anzahl von Ebenen bzw. Knoten ist möglich. Die Bits in der virtuellen Adresse, die diesen Ebenen entsprechen, müssen den vorbestimmten Code haben, um der Zustandsmaschine das Ebenen-Überspringen zu signalisieren. Diese Optimierung erfordert eine zusätzliche Information für den Zeiger 500, wobei diese zusätzlichen Informationen in den Einträgen der Wurzelliste 414 abgespeichert sind. Selbstverständlich könnte auch nur die Ebene 3 übersprungen werden, während der Knoten der Ebene 4 nicht übersprungen werden darf. In diesem Fall müßten die zusätzlichen Informationen in einem Eintrag einer Liste für den Knoten der Ebene 4 vorhanden sein.

In nachfolgenden wird auf Fig. 6 Bezug genommen. Fig. 6 zeigt eine zu Fig. 4a und Fig. 5 korrespondierende Tabelle für die Bedeutung der Bits der virtuellen Adresse und den Zusammenhang zwischen der Knotengröße, d. h. der maximalen Anzahl von Einträgen in die Knotenliste. Anders ausgedrückt stellt jede Zeile der Tabelle in Fig. 6 einen Abschnitt der ganz links in Fig. 6 bezeichneten Ebene der virtuellen Adresse dar. In der ersten Zeile der Tabelle von Fig. 6, die sich auf die Ebene 5, also auf die Wurzelebene, bezieht, ist ausgeführt, daß der Abschnitt 410 lediglich ein Bit hat, nämlich z. B. das Bit 23 der virtuellen Adresse. Durch ein Bit können zwei verschiedene Einträge in die Wurzelliste indexiert werden, so daß die Knotengröße des Wurzelknotens 2 beträgt. Die vierte Ebene umfaßt die Bits 19-22. Durch vier Bits können 16 verschiedene Einträge in einer Liste für die vierte Ebene indexiert werden, so daß die Knotengröße, also die Größe einer Liste der vierten Ebene 16 beträgt. Die Anzahl der Listen in der vierten Ebene beträgt 2, da die Wurzelliste zwei Einträge hat.

Sowohl der Abschnitt für die dritte Ebene als auch der Abschnitt für die zweite Ebene haben beide vier Bits, so daß eine Liste der zweiten Ebene oder der dritten Ebene ebenfalls maximal 16 Einträge haben kann. Der Abschnitt 402 für die erste Ebene umfaßt fünf Bits, so daß durch diesen Abschnitt 32 Einträge einer Liste indexiert werden können, wie es auch aus der Liste 434 für die erste Ebene von Fig. 4a deutlich wird, dieselbe hat 32 Zeilen, während eine Liste der zweiten Ebene lediglich 16 Zeilen hat. Die nullte Ebene, d. h. der Seitenversatz ausgehend von einer Seitenanfangsadresse, umfaßt sechs Bits, so daß hiermit 64 Listeneinträge indexiert werden können. Nachdem eine physikalische Seite 64 Byte hat, können minimale Versätze von einem Byte adressiert werden. Wäre die Seitengröße beispielsweise 128 Byte, so wäre die minimale Speichergröße, die adressiert werden kann, zwei Byte groß.

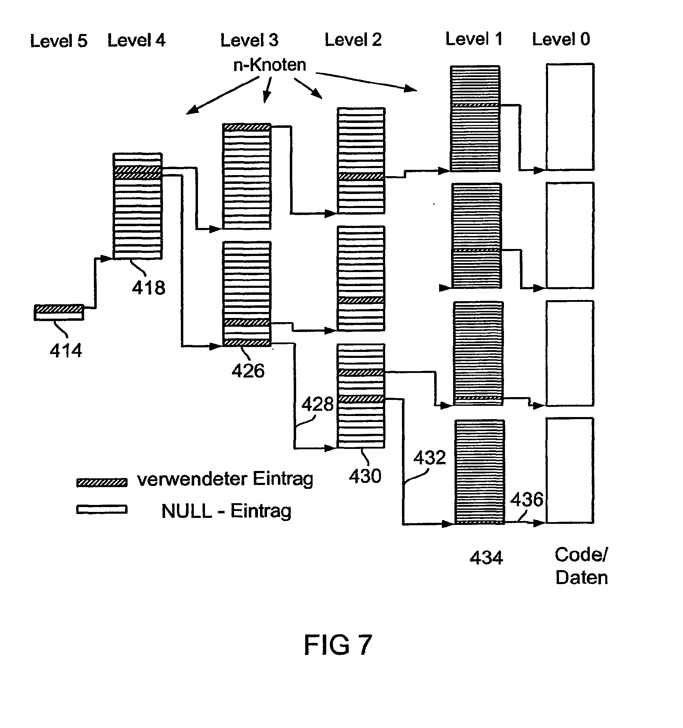

Im nachfolgenden wird auf Fig. 7 Bezug genommen. In Fig. 7 sind ebenso wie in den Fig. 5 und 4a benutzte Einträge in eine Liste fett gezeichnet, während Null-Einträge als nichtausgefülltes Rechteck dargestellt sind. Aus der in Fig. 7 gezeigten Abbildungsvorschrift wird klar, daß sehr viele Null-Einträge vorhanden sind, und lediglich ein paar verwendete Einträge. Dies rührt daher, daß der virtuelle Adressraum wesentlich größer ist als der physikalische Adressraum. Bei dem bevorzugten Ausführungsbeispiel der vorliegenden Erfindung ist der virtuelle Adressraum 4 Gigabyte groß, während der physikalische Adressraum lediglich 4 Megabyte groß ist. Wenn eine seitenweise Speicherorganisation verwendet wird, muß jedoch dennoch für jede in Fig. 7 gezeigte Liste eine Speicherseite vorgesehen werden. Bei dem in Fig. 7 gezeigten Beispiel für eine Abbildungsvorschrift müssen daher 10 Speicherseiten verwendet werden, um lediglich 4 physikalische Seiten, in denen Code bzw. Daten vorhanden sind, zu verwalten. In Anwendungen, bei denen eine ausreichende Menge an nicht-flüchtigem Speicher vorhanden ist, um die Listen für die Ebenen zu speichern, spielt dies keine Rolle.

Wenn jedoch der Speicherplatz begrenzt ist und eine wertvolle Ressource ist, so wird es bevorzugt, die n-Knoten-Listen zu komprimieren, um das Verhältnis der Anzahl der verwendeten Einträge einer Liste zur Gesamtanzahl der Einträge in der Liste zu vergrößern. Es wird daher von den sogenannten n-Knoten zu den q-Knoten übergegangen. Während der Ausdruck "n-Knoten" bedeutet, daß sämtliche Listen eines Knotens einer Ebene dieselbe Anzahl von Einträgen, nämlich n Einträge hat, bedeutet der Ausdruck "q-Knoten", daß die Knotenliste komprimiert ist, und daß die Anzahl der Einträge in eine Liste für ein und dieselbe Ebene von Liste zu Liste variieren kann.

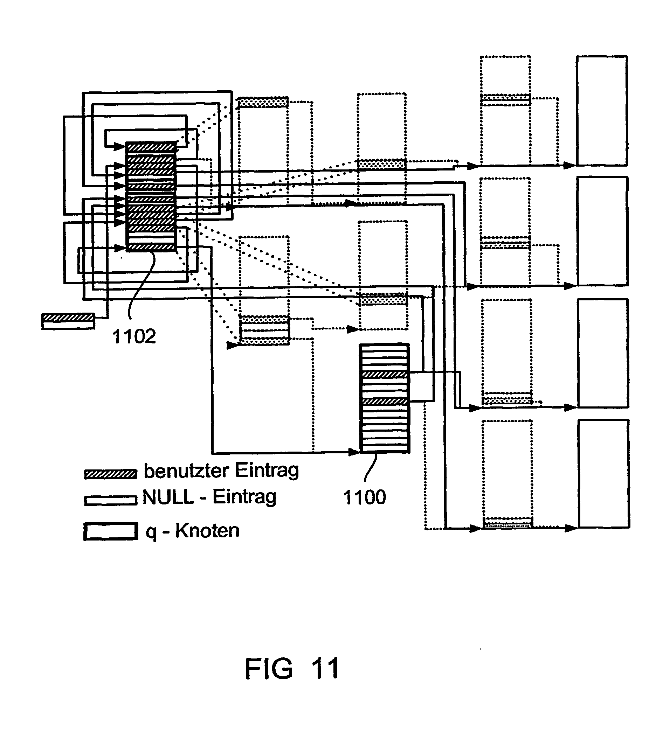

Teilweise gefüllte Knotenlisten werden komprimiert und, wie es insbesondere bezugnehmend auf Fig. 11 ausgeführt wird, können mehrere komprimierte Knoten auf einer Seite des physikalischen Speicherbereichs abgespeichert werden. Die komprimierten Knoten werden q-Knoten genannt, wobei die hierarchische Baumstruktur mit komprimierten Knoten als q-Baum bezeichnet wird.

Die Theorie, die hinter einem q-Knoten steht, besteht darin, daß alle verwendeten Einträge einer Liste, d. h. alle Nicht-Null-Zeiger, in einem n-Knoten in einer Struktur plaziert werden können (dem q-Knoten), die kleiner als der ursprüngliche n-Knoten ist. Dies wird erreicht, indem der n-Knoten in kleinere Abschnitt aufgeteilt wird, wobei für eine maximale Kompression der kleinste Abschnitt genommen wird, der alle Nicht-Null-Zeiger enthält. Um die Position eines Zeigers in dem n-Knoten zu spezifizieren, wird ein Offset-Wert für den q-Knoten-Zeiger benötigt. Dieser Offset-Wert wird auch als virtueller Offset bezeichnet.

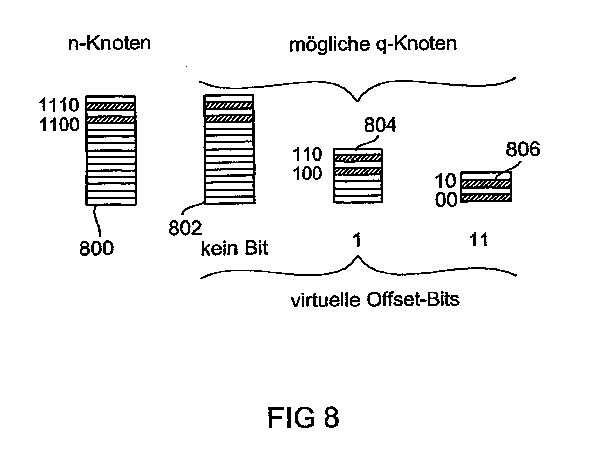

Im nachfolgenden wird auf Fig. 8 Bezug genommen, um eine mögliche Kompressionsart einer Liste 800 eines n-Knotens darzustellen. Die Liste 800 umfaßt zwei Nicht-Null-Einträge, die binär durch 1100 und 1110 indexiert werden können. Neben der Liste 800 sind mögliche q-Knoten dargestellt. Bei der beschriebenen abschnittsweisen Kompression können prinzipiell drei verschiedene "komprimierte" Listen, d. h. q-Knoten, 802, 804 und 806 erzeugt werden. Die Liste 802 entspricht der Liste 800. Hier handelt es sich um die triviale Form der Kompression, die q-Knoten-Liste 802 ist genau so groß wie die Liste 800, und es wird kein Offset-Bit benötigt. Dagegen ist die Liste 804 bereits auf die Hälfte des Speicherplatzes komprimiert. Die Liste enthält zwei Einträge, die mit 110 und 100 indexiert werden können. Um von den Einträgen der komprimierten Liste 804 auf die Einträge der nicht-komprimierten Liste 800 zu kommen, wird ein virtuelles Offset-Bit benötigt, das einen Wert von 1 hat. Das virtuelle Offset-Bit entspricht dem höchstwertigen Bit (msb) beider Einträge der Liste 800. Eine Kompression ist also möglich, wenn die msbs der Nicht-Null-Einträge der Liste 800 gleich sind. Da auch die höchstwertigen Bits der Einträge der komprimierten Liste 804 gleich sind, ist noch eine höhere Kompression zu erreichen, wie es die komprimierte Liste 806 zeigt. Die beiden Nicht-Null-Einträge der Liste 806 haben höchstwertige Bits, die nicht gleich sind, so daß keine weitere Kompression möglich ist. Um von der komprimierten Liste 806 wieder auf die nicht-komprimierte Liste 800 zu kommen, werden zwei Offset-Bits benötigt, nämlich die zwei höchstwertigen Bits der Einträge in der Liste 800, die für beide Nicht-Null-Einträge in der Liste gleich sind.

Abhängig vom Ausmaß der Kompression des Knotens (keine Kompression, eine Kompression von 16 Einträgen auf 8 Einträge und schließlich eine Kompression von 16 Einträgen auf 4 Einträge) beträgt der virtuelle Offset-Wert 0, 1 Bit oder 2 Bits. Die Kompression auf 8 Einträge, d. h. eine halbe Speicherseite, bedeutet, daß die Zeiger im ursprünglichen n-Knoten nur in entweder der oberen oder der unteren Hälfte sind. Der virtuelle Offset muß daher 1 Bit betragen, um die Position zu spezifizieren, wobei das Offsetbit mit einem Wert von 0 bedeutet, daß sämtliche Nicht-Null-Einträge in der unteren Hälfte sind, während ein Offsetbit von 1 bedeutet, daß sämtliche Einträge der Liste in der oberen Hälfte der n-Knotenliste 800 sind.

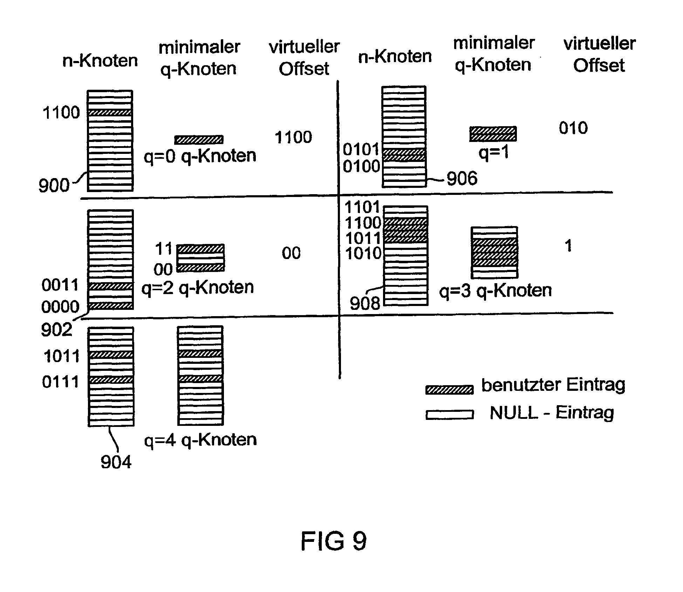

Analog dazu ist, wie es anhand von Fig. 8 dargestellt worden ist, bei der Liste 800 eine weitere Kompression möglich, da sämtliche Nicht-Null-Einträge nicht nur in der oberen Hälfte sondern sogar im oberen Viertel der Liste sind. In diesem Fall sind die Offset-Bits bei einem Wert von "11", was anzeigt, daß die Zeiger in der n-Knoten-Liste im vierten Viertel zu finden sind. Wenn keine Kompression durchgeführt wird (Liste 802), weil das Kompressionsverfahren keine Kompression erlaubt, wie es anhand von Fig. 9 dargestellt wird, werden auch keine Offset-Bits benötigt. Die Größe der Liste im nächstniedrigeren Knoten wird in der Knotenliste spezifiziert, die den Zeiger umfaßt, der auf den nächstniedrigeren (komprimierten) Knoten zeigt. Wenn beispielsweise die Liste 430 von Fig. 4a komprimiert ist, beispielsweise um die Hälfte, so würde der Eintrag 426 der nächsthöheren Liste neben der physikalischen Adresse, an der die Liste 430 gespeichert ist, auch die Größe der Liste spezifizieren. Die Liste 430 wäre dann beispielsweise bei einer Kompression um die Hälfte, lediglich 8 Einträge groß, obgleich der Abschnitt 404 der virtuellen Adresse, der dem Level 2 entspricht, 4 Bits hat und eigentlich eine 16-Einträge-Liste indexiert. Der Abschnitt 404 der virtuellen Adresse wäre dann so gestaltet, daß ein Bit desselben, typischerweise das höchstwertige Bit, als virtuelles Offsetbit interpretiert wird.

Dadurch ergibt sich auch ein weiterer Kontrollmechanismus. Die Hardware-Zustandsmaschine wird das höchstwertige Bit des Abschnitts 404 mit dem Größenbit im Nicht-Null-Eintrag der Liste 426 vergleichen und bei Übereinstimmung eine Adressübersetzung fortsetzen, während, falls die Bits nicht übereinstimmen, ein Seitenfehler ausgegeben wird, da dann zumindest entweder die Abbildungsvorschrift oder die virtuelle Adresse fehlerhaft ist.

Im nachfolgenden wird auf Fig. 9 eingegangen, um weitere Beispiele darzustellen, wie n-Knoten auf ihre minimalen q-Knoten reduziert werden können, wenn das bezüglich Fig. 8 beschrieben Kompressionsverfahren verwendet wird. Die Liste 900 in Fig. 9 umfaßt lediglich einen Nicht-Null-Eintrag, der durch die Bitkombination "1100" indexiert ist. Der minimale q-Knoten umfaßt lediglich einen einzigen Eintrag und, dementsprechend, 4 virtuelle Offsetbits "1100". Eine Liste 900 mit lediglich einem einzigen Nicht-Null-Eintrag kann somit auf einfache Art und Weise hinsichtlich ihres Speicherplatzbedarfs um das 1/16-fache reduziert werden.

Die Liste 902 umfaßt zwei Nicht-Null-Einträge, die mit "0001" und "0011" indexiert werden können. Die beiden Einträge haben zwei gleiche höchstwertige Bits, so daß zwei virtuelle Offsetbits 00 entstehen, und die Liste um ein Viertel reduziert werden kann.

Die Liste 904 umfaßt zwei Nicht-Null-Einträge, deren höchstwertige Bits jedoch ungleich sind, so daß bei dem hier gewählten beispielhaften Kompressionsalgorithmus keine Kompression erreichbar ist. Der q-Knoten ist daher genau so groß wie der n-Knoten.

Die Beispielliste 906 umfaßt zwei Einträge mit "0100" und "0101". Die drei höchstwertigen Bits sind gleich, so daß eine Kompression um das 1/8-fache erreicht werden kann, was zu den virtuellen Offset-Bits "010" führt.

Die Beispielliste 908 umfaßt vier Nicht-Null-Einträge zwischen "1010" und "1101". Alle vier Einträge haben dasselbe höchstwertige Bit, so daß eine Kompression um das ½-fache erreicht werden kann, was zu einem virtuellen Offset-Bit von "1" führt.

Es sei darauf hingewiesen, daß die q-Knoten der Ebene 1 (Fig. 4a) eine spezielle Rolle spielen. Da ihre Einträge nicht auf weitere q-Knoten zeigen, sondern direkt auf die physikalischen Speicherseiten, müssen keine zusätzlichen Informationen, wie z. B. ein Größenwert einer hierarchisch niedrigen q-Liste, zusammen mit den Zeigern gespeichert werden. Folglich wird ein Eintrag in einer Liste auf Ebene 1 dazu verwendet, zwei Zeiger zu speichern. Daher umfaßt der Abschnitt 402 der virtuellen Adresse, der der Ebene 1 zugeordnet ist, fünf virtuelle Adressbits. Das zusätzliche Bit spezifiziert, welcher der Zeiger in dem ausgewählten q-Knoten-Eintrag verwendet werden soll. Es sei darauf hingewiesen, daß auch einer der zwei Zeiger 0 sein kann. Nachdem ein Eintrag in einer Liste der Ebene 1 zwei Zeiger speichert, ist die Listenlänge einer Liste, wie z. B. der Liste 434 von Fig. 4a, doppelt so groß wie die Länge einer Liste einer höheren Ebene, wie z. B. der Ebene 430.

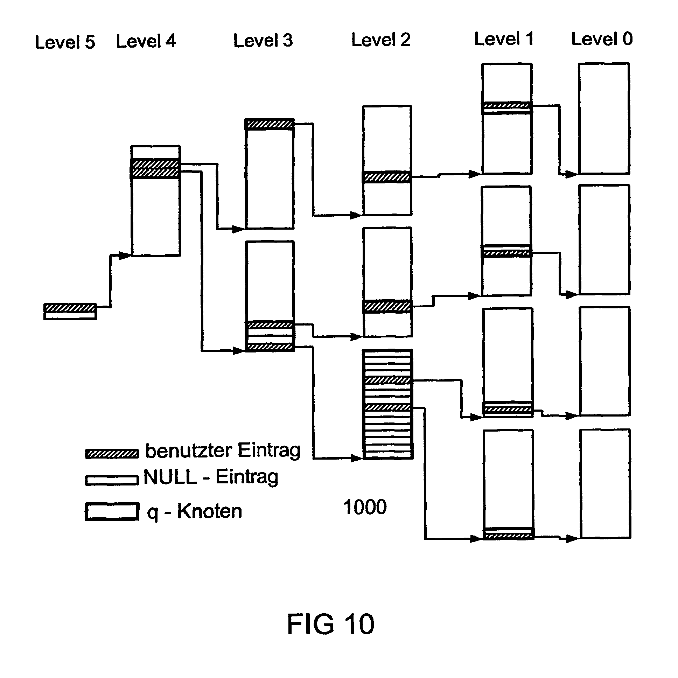

Im nachfolgenden wird auf Fig. 10 Bezug genommen, um darzustellen, wie die komprimierten q-Knoten dazu eingesetzt werden können, um die Speicherbelegung zu minimieren. Zunächst werden beispielsweise gemäß der Tabelle von Fig. 9 die minimalen q-Knoten einer hierarchischen Abbildungsvorschrift identifiziert. Daraus entsteht eine Abbildungsvorschrift, wie sie in Fig. 10 dargestellt ist. Die ausgefüllten Rechtecke bezeichnen benutzte Einträge, während die nicht-ausgefüllten Rechtecke Null-Einträge bezeichnen. Jeder q-Knoten ist durch eine dicke Linie umrandet. Es ist zu sehen, daß bei dem gewählten Beispiel der Abbildungsvorschrift sämtliche Listen außer einer Liste 1000 komprimiert werden konnten. Die Liste 1000 konnte mit dem gewählten Kompressionsverfahren nicht komprimiert werden, da die zwei Nicht-Null-Einträge, die dieselbe umfaßt, nicht in der derselben Hälfte der Liste aufgeführt sind.

Bei der in Fig. 10 gezeigten Abbildungsvorschrift sind noch alle, auch die komprimierten, Listen an jeweils eigenen physikalischen Speicherseiten oder "Page Frames" abgelegt, so daß die Page Frames sehr locker belegt sind, es wurde jedoch noch keine Reduktion der Anzahl von Page Frames erreicht. Die nicht-belegten Worte in den Page Frames können bei dem in Fig. 10 gezeigten Ausführungsbeispiel jedoch bereits durch andere Daten belegt werden, so daß in einer physikalischen Speicherseite eine Liste für die Abbildungsvorschrift und zusätzlich weitere Daten gespeichert werden können. Aus Speicherverwaltungsgründen wird es jedoch bevorzugt, zu einem Konzept gemäß Fig. 11 überzugehen, um die Abbildungsvorschrifts-Informationen, also die Listen für die einzelnen Ebenen, in möglichst wenigen physikalischen Speicherseiten zu konzentrieren, damit komplette Speicherseiten frei gemacht werden, um in denselben andere Daten abspeichern zu können.

Nachdem die meisten q-Knoten klein sind, können bei der in Fig. 11 dargestellten Abbildungsvorschrift alle Knotenlisten außer einer Knotenliste 1100 in die gleiche physikalische Speicherseite 1102 gepackt werden. Folglich wird die Abbildungsvorschrift bzw. die Seitenzuordnungsstruktur, von 10 auf 2 Speicherseiten reduziert. Auf diese Art und Weise liefert die q-Baum-Struktur eine beträchtliche Optimierung im Vergleich zu der in Fig. 4a gezeigten Option, bei der keine Listenkompression durchgeführt worden ist.

Der einzige "verschwendete" Speicher ist aufgrund der Listen vorhanden, die mehrere Null-Zeiger enthalten und nicht weiter komprimiert werden können. Die Liste 1100 fällt in diese Kategorie. Erfahrungsgemäß existieren jedoch wenige solcher q-Knoten. Normale Programme verwenden üblicherweise zumindest einige zusammenhängende Speicherbereiche, wie z. B. Code, statische Daten, Stack und Heap. Speicherlayouts dieser Art haben für die Zuordnungsstruktur einen kleineren Zusatzaufwand. Dennoch sind manchmal fragmentierte Speicherlayouts notwendig.

Obgleich im vorhergehenden lediglich die in Fig. 9 näher dargestellte Listenkompressionsfunktion dargestellt worden ist, sei darauf hingewiesen, daß sämtliche Listenkompressionsverfahren eingesetzt werden können. Die Kompression muß also nicht ausschließlich darauf basieren, daß Einträge in derselben Hälfte bzw. in dem gleichen Viertel einer Liste sein müssen. So könnte die Liste 1100 beispielsweise dadurch komprimiert werden, daß ein alternatives Kompressionsverfahren verwendet wird, das darauf beruht, daß Einträge in unterschiedlichen Hälften der Liste sind. Je nach Layout der virtuellen Adresse und nach der Bedeutung der Offset-Bits in einem Abschnitt der virtuellen Adresse können auch mehrere verschiedene Kompressionsverfahren kombiniert werden, wenn die Speicheranforderungen so sind, daß auch eine geringe Anzahl von Listen, die nicht-komprimiert werden können, wie z. B. die Liste 1100 von Fig. 11, nicht akzeptierbar ist.

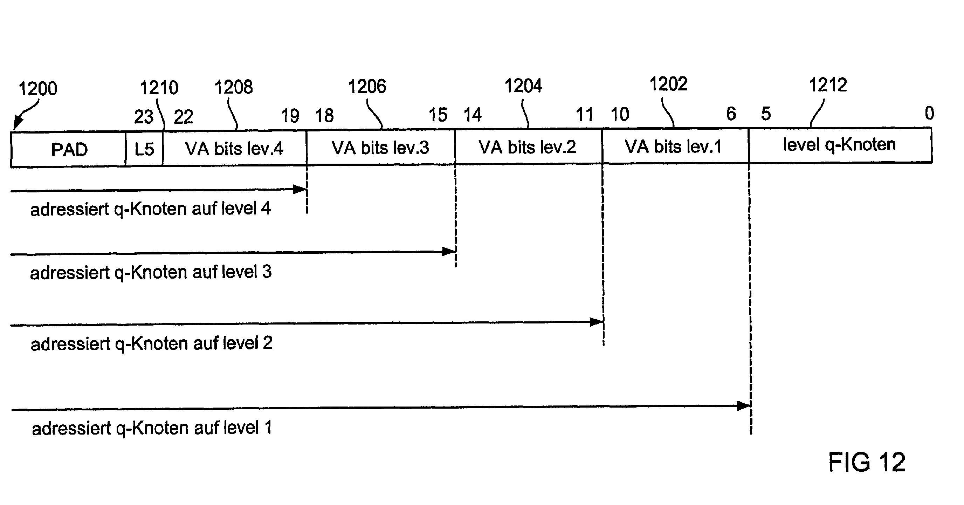

Bei einem bevorzugten Ausführungsbeispiel der vorliegenden Erfindung wird ein Knotenadressierungsmodus (NAM; NAM = Node Addressing Mode) vorgesehen, um die Abbildungsvorschrift im nicht-flüchtigen Speicher modifizieren zu können. Hierzu wird das in Fig. 12 dargestellte Format für eine virtuelle Adresse 1200 verwendet. Die virtuelle Adresse ist wie in Fig. A in mehrere Abschnitte aufgeteilt, wobei die Abschnitte 1210 bis 1202 den Abschnitten 410 bis 402 von Fig. 4a prinzipiell entsprechen. Der letzte Abschnitt 1212, der in Fig. 4a den Versatzwert bezeichnet hatte, wird bei der virtuellen Adresse 1200 jedoch dafür verwendet, die q-Knoten-Ebene zu signalisieren, deren Liste im NAM-Modus modifiziert werden soll.

Der NAM-Modus wird dazu verwendet, um virtuelle Adressen zu manipulieren, da aus Sicherheitsaspekten lediglich ein virtueller Adressierungsmodus gefahren werden soll, so daß die CPU keinen direkten Zugriff auf physikalische Seiten hat. Durch Einstellen des Abschnitts 1212 der virtuellen Adresse 1200 kann auf Listen für einzelne Ebenen und insbesondere auf die Einträge in diesen Listen zugegriffen werden.

Hierzu umfaßt jeder Paketbeschreiber, der in der Wurzelliste 414, d. h. dem Package Descriptor Buffer, abgespeichert ist, ein NAM-Bit, das, wenn es gesetzt ist, einen Zugriff auf die q-Knoten-Listen für diese spezielle Speicherpackage erlaubt. Es sei jedoch darauf hingewiesen, daß nur Packages in priviligierten Schichten, d. h. privilegierte Modi des Betriebssystems, das NAM-Bit manipulieren können. Wenn das NAM-Bit gesetzt ist, wird der letzte Abschnitt 1212 der virtuellen Adresse nicht mehr als Seitenversatzwert aufgefaßt, sondern wird dazu verwendet, um der Hardware-Zustandsmaschine zu signalisieren, ob der q-Knoten auf Ebene 4, auf Ebene 3, auf Ebene 2 oder auf Ebene 1 adressiert werden soll, um auf die Liste bzw. auf Einträge in der entsprechenden Liste zuzugreifen.

Wenn das NAM-Bit gesetzt ist, wird die virtuelle Adresse von der Hardware-Zustandsmaschine somit anders als bei dem in Fig. 4a beschriebenen Fall interpretiert.

Die Hardware-Zustandsmaschine führt nun, wenn das NAM-Bit gesetzt ist, eine Adressübersetzung lediglich durch, bis der q-Knoten der durch den Abschnitt 1212 definierten Stoppebene wiedergewonnen ist. Dann wird ein endgültiger Buszyklus auf die physikalische Seite erzeugt, die durch den Zeiger eines Eintrags in der Liste für die definierte Stoppebene bezeichnet ist. Auf die angeforderten Listendaten wird dann zugegriffen und dieselben werden vorzugsweise in dem Datencache 20 (Fig. 1) gespeichert. Es sei darauf hingewiesen, daß diese Adressübersetzung nicht im TLB 18b (Fig. 1) gespeichert wird, da es sich um die Abbildungsvorschrift selbst handelt und nicht um eine Zuordnung einer virtuellen Adresse zu einer physikalischen Adresse.

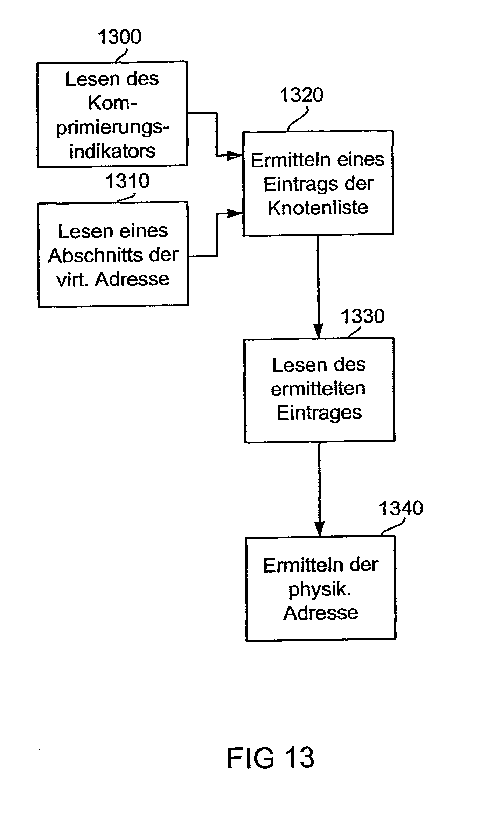

Fig. 13 zeigt eine Vorrichtung zum Ermitteln einer physikalischen Adresse aus einer virtuellen Adresse gemäß der vorliegenden Erfindung. Die Vorrichtung umfaßt eine Einrichtung 1300 zum Lesen des Komprimierungsindikators aus der Abbildungsvorschrift, eine Einrichtung 1310 zum Lesen eines Abschnitts der virtuellen Adresse (400, 402, 404, 406, 408, 410 von Fig. 4a), eine Einrichtung zum Ermitteln eines Eintrags der Knotenliste eines Knotens der Knotenebene, die dem gelesenen Abschnitt der virtuellen Adresse zugeordnet ist, unter Verwendung des durch die Einrichtung 1310 gelesenen Abschnitts und des von der Einrichtung 1300 gelesenen Komprimierungsindikators. Diese Einrichtung ist in Fig. 13 mit dem Bezugszeichen 1320 bezeichnet. Die erfindungsgemäße Vorrichtung umfaßt ferner eine Einrichtung 1330 zum Lesen des durch die Einrichtung 1320 ermittelten Eintrags der Knotenliste, um einen Knoten einer hierarchisch niedrigeren Knotenebene zu identifizieren, auf den durch den ermittelten Eintrag verwiesen wird. Die Vorrichtung gemäß der vorliegenden Erfindung umfaßt ferner eine Einrichtung 1340 zum Ermitteln der physikalischen Adresse unter Verwendung des Knotens der hierarchisch niedrigeren Knotenebene, auf den durch den ermittelten Eintrag verwiesen wird. Die Einrichtung 1340 ist angeordnet, um den Rest der Adressenübersetzung auszuführen, d. h. alle verbleibenden Abschnitte der virtuellen Adresse abzuarbeiten. Die Funktionalität der Einrichtung 1340 kann, wenn noch weitere Abschnitte der virtuellen Adresse vorhanden sind, die Funktionalitäten der Einrichtungen 1300 bis 1330 umfassen. Wenn dagegen der ermittelte Eintrag, der durch die Einrichtung 1330 ermittelt wird, bereits aus der Ebene 1 (402 in Fig. 4a) ist, so wird die Einrichtung 1340 die physikalische Adresse 440 von Fig. 4a dadurch ermitteln, daß aus der virtuellen Adresse noch der Page-Offset (Ebene 0) gelesen wird, um dann auf den korrekten Speicherplatz 440 in der durch den Eintrag identifizierten physikalischen Speicherseite zugreifen zu können.

Ist dagegen, bezugnehmend auf Fig. 4a, der ermittelte Eintrag der Eintrag aus der Knotenebene 4 (408 in Fig. 4a), d. h.-derselbe einen vorbestimmten Code, so wird die Einrichtung 1340 zumindest eine Ebene überspringen, um komprimierte Knoten niedrigerer Knotenebenen oder auch unkomprimierte Knoten niedrigerer Knotenebenen zu verarbeiten, bis alle Abschnitte der virtuellen Adresse abgearbeitet sind und die physikalische Adresse 440 direkt, oder im Falle einer seitenweisen Speicherorganisation unter Verwendung eines Offset-Werts berechnet ist.

### Bezugszeichenliste

- 10: CPU
- 12: ROM
- 14: NVM (E²PROM)
- 16: RAM
- 18: Speicherverwaltungseinheit
- 18a: Hardware-Zustandsmaschine
- 18b: Translation Look Aside Buffer (TLB)
- 20: Befehls/Daten-Cache
- 24: Daten/Befehle-Bus
- 26: Hardware-Zustandsmaschine-Zugriffsbus
- 30: virtuelle Speicherseite
- 32: Abbildungsvorschrift
- 33: Zugriffsmodus-Bits
- 34: Aufgaben-Identifizierer-Bits
- 36: Adresse einer virtuellen Seite
- 38: Adressversatz einer virtuellen Seite
- 40: Zugriffsrechteinformationen
- 42: Spalte für eine virtuelle Adresse
- 44: Spalte für eine physikalische Adresse
- 46: Seitentabelle
- 48: Zugriffsüberprüfungsmodul
- 50: Seitenfehlermodul
- 52: physikalische Adresse
- 400: virtuelle Adresse
- 402: Abschnitt für Ebene 1
- 404: Abschnitt für Ebene 2
- 406: Abschnitt für Ebene 3
- 408: Abschnitt für Ebene 4
- 410: Abschnitt für Ebene 5
- 412: Paketadresse
- 414: Paketbeschreiberpuffer
- 416: Zeiger auf physikalische Adresse
- 418: Liste für Ebene 4
- 420: Zeiger auf physikalische Adresse
- 422: Liste für Ebene 4
- 424: Zeiger auf physikalische Adresse
- 426: Liste für Ebene 3
- 428: Zeiger auf physikalische Adresse
- 430: Liste für Ebene 2
- 432: Zeiger auf physikalische Adresse
- 434: Liste für Ebene 1
- 436: Zeiger auf physikalische Adresse
- 438: Seitenversatzwert
- 440: physikalische Adresse
- 500: Zeiger zum Überspringen einer oder mehrerer Ebenen

- 800: n-Knoten-Liste
- 802: nicht-komprimierte q-Knoten-Liste
- 804: einfach komprimierte q-Knoten-Liste
- 806: doppelt komprimierte q-Knoten-Liste
- 900: Beispiel für n-Knoten-Liste
- 902: Beispiel für n-Knoten-Liste
- 904: Beispiel für n-Knoten-Liste
- 906: Beispiel für n-Knoten-Liste
- 908: Beispiel für n-Knoten-Liste

- 1000: nicht-komprimierte q-Knoten-Liste
- 1100: Speicherseite mit einer einzigen nicht-komprimierten q-Knoten-Liste
- 1102: physikalische Speicherseite mit einer Mehrzahl von komprimierten q-Knoten-Listen
- 1200: virtuelle Adresse für den Knotenadressierungsmodus
- 1210: Abschnitt für Ebene 5
- 1208: Abschnitt für Ebene 4
- 1206: Abschnitt für Ebene 3
- 1204: Abschnitt für Ebene 2
- 1202: Abschnitt für Ebene 1
- 1212: Abschnitt zum Identifzieren der Liste, auf die zugegriffen werden soll
- 1300: Einrichtung zum Lesen des Komprimierungsindikators
- 1310: Einrichtung zum Lesen eines Abschnitts der virtuellen Adresse
- 1320: Ermitteln eines Eintrags der Knotenliste
- 1330: Lesen des ermittelten Eintrags
- 1340: Ermitteln der physikalischen Adresse

## Patentansprüche

1. Verfahren zum Ermitteln einer physikalischen Adresse aus einer virtuellen Adresse unter Verwendung einer hierarchischen Abbildungsvorschrift mit hierarchisch angeordneten Knotenebenen, wobei ein virtueller Adressraum größer als ein physikalischer Adressraum ist, wobei die virtuelle Adresse Abschnitte (402 bis 410) aufweist, wobei ein Abschnitt der virtuellen Adresse einer Knotenebene zugeordnet ist, wobei die Knotenebene zumindest einen Knoten aufweist, wobei jeder Knoten eine Knotenliste (418) mit Listeneinträgen aufweist, wobei ein Listeneintrag einer Knotenliste auf einen Knoten einer hierarchisch niedrigeren Knotenebene verweist, wobei unter Verwendung eines Listeneintrags einer Knotenliste (434) einer hierarchisch niedrigsten Knotenebene die physikalische Adresse (404) ermittelbar ist,
**dadurch gekennzeichnet, dass**
eine Länge eines Abschnitts der virtuellen Adresse eine maximale Anzahl von Einträgen einer Knotenliste eines Knotens definiert, der zu der Knotenebene gehört, der der Abschnitt zugeordnet ist, wobei ein Knoten ein komprimierter Knoten ist, dessen Knotenliste eine geringere als die maximale Anzahl von Einträgen aufweist, und wobei die Abbildungsvorschrift einen Komprimierungsindikator aufweist, der einem komprimierten Knoten zugeordnet ist, und
**dadurch gekennzeichnet, dass** das Verfahren folgende Schritte aufweist:
Lesen (1300) des Komprimierungsindikators;
Lesen (1310) eines Abschnitts der virtuellen Adresse;
Ermitteln (1320) eines Eintrags in einer Knotenliste eines Knotens der Knotenebene, die dem gelesenen Abschnitt der virtuellen Adresse zugeordnet ist, unter Verwendung des gelesenen Abschnitts der virtuellen Adresse und des Komprimierungsindikators;
Lesen (1330) des ermittelten Eintrags der Knotenliste, um einen Knoten einer hierarchisch niedrigeren Knotenebene zu identifizieren, auf den durch den ermittelten Eintrag verwiesen wird; und
Ermitteln (1340) der physikalischen Adresse (440) unter Verwendung des Knotens der hierarchisch niedrigeren Knotenebene, auf den durch den ermittelten Eintrag verwiesen wird.

2. Verfahren nach Anspruch 1, bei dem der Komprimierungsindikator an einer vorbestimmten Stelle in der Knotenliste des komprimierten Knotens gespeichert ist, und
bei dem in dem Schritt des Lesens (1310) des Komprimierungsindikators zu der vorbestimmten Stelle gesprungen wird, um den Komprimierungsindikator zu lesen.

3. Verfahren nach Anspruch 1, bei dem der Komprimierungsindikator für einen komprimierten Knoten in dem Listeneintrag einer Knotenliste eines Knotens einer hierarchisch höheren Knotenebene gespeichert ist, und
bei dem im Schritt des Lesens des Komprimierungsindikators der Komprimierungsindikator bei einem Lesen eines Listeneintrags einer Knotenliste des Knotens der hierarchisch höheren Knotenebene erhalten wird.

4. Verfahren nach einem der vorhergehenden Ansprüche,
bei dem eine Knotenliste (804) eines komprimierten Knotens eine Anzahl von Listeneinträgen aufweist, wobei ein Listeneintrag einen Listenindex aufweist, wobei die Knotenliste eines komprimierten Knotens derart komprimiert ist, daß die Anzahl der Listeneinträge im Vergleich zur maximalen Anzahl halbiert ist, wenn jeweils das höchstwertige Bit jedes Listenindex für alle Listeneinträge ungleich 0 gleich ist, und bei dem im Schritt (1320) des Ermittelns der Komprimierungsindikator so interpretiert wird, daß das höchstwertige Bit des Abschnitts der virtuellen Adresse bei der Ermittlung des Eintrags ignoriert wird.

5. Verfahren nach einem der vorhergehenden Ansprüche,
bei dem eine Knotenliste (804) eines komprimierten Knotens eine Anzahl von Listeneinträgen aufweist, wobei ein Listeneintrag einen Listenindex aufweist, und
bei dem eine Knotenliste (806) eines komprimierten Knotens derart komprimiert ist, daß die Anzahl der Listeneinträge im Vergleich zur maximalen Anzahl geviertelt ist, wenn jeweils die beiden höchstwertigen Bits jedes Listenindex für alle Listeneinträge ungleich 0 gleich sind, und
bei dem im Schritt des Ermittelns (1320) der Komprimierungsindikator so interpretiert wird, daß die beiden höchstwertigen Bits des Abschnitts der virtuellen Adresse bei der Ermittlung des Eintrags ignoriert werden.

6. Verfahren nach einem der vorhergehenden Ansprüche,
bei dem eine seitenweise Adressierung des physikalischen Speichers vorgesehen ist, wobei eine Speicherseite mittels einer Basisadresse und eines Offset-Werts adressierbar ist,
bei dem Knotenlisten von zumindest zwei komprimierten Knoten in der selben physikalischen Speicherseite (1102) gespeichert sind, und
bei dem ein Listeneintrag einer Knotenliste eines Knotens einer hierarchisch höheren Knotenebene sowohl eine Basisadresse als auch einen Offset-Wert für die Speicherseite (1102) umfaßt, an der die Knotenliste für den Knoten gespeichert ist, auf den durch den Eintrag verwiesen wird, und
bei dem im Schritt (1320) des Ermittelns des Eintrags die Ermittlung unter Verwendung der Basisadresse und des Offset-Werts vorgenommen wird.

7. Verfahren nach einem der vorhergehenden Ansprüche,
bei dem im Schritt (1340) des Ermittelns der physikalischen Adresse die Schritten Lesen (1300) des Komprimierungsindikators, Lesen (1310) eines Abschnitts der virtuellen Adresse, Ermitteln (1320) eines Eintrags der Knotenliste und Lesen (1330) des ermittelten Eintrags durchgeführt werden, bis die hierarchisch niedrigste Knotenebene (434) erreicht ist.

8. Verfahren nach einem der vorhergehenden Ansprüche,
bei dem ein vorbestimmter Wert eines Abschnitts der virtuellen Adresse (406, 408) anzeigt, daß eine Knotenebene übersprungen wird.

9. Vorrichtung zum Ermitteln einer physikalischen Adresse aus einer virtuellen Adresse unter Verwendung einer hierarchischen Abbildungsvorschrift mit hierarchisch angeordneten Knotenebenen, wobei ein virtueller Adressraum größer als ein physikalischer Adressraum ist, wobei die virtuelle Adresse Abschnitte (402 bis 410) aufweist, wobei ein Abschnitt der virtuellen Adresse einer Knotenebene zugeordnet ist, wobei die Knotenebene zumindest einen Knoten aufweist, wobei jeder Knoten eine Knotenliste (418) mit Listeneinträgen aufweist, wobei ein Listeneintrag einer Knotenliste auf einen Knoten einer hierarchisch niedrigeren Knotenebene verweist, wobei unter Verwendung eines Listeneintrags einer Knotenliste (434) einer hierarchisch niedrigsten Knotenebene die physikalische Adresse (404) ermittelbar ist, wobei eine Länge eines Abschnitts der virtuellen Adresse eine maximale Anzahl von Einträgen einer Knotenliste eines Knotens definiert, der zu der Knotenebene gehört, der der Abschnitt zugeordnet ist, wobei ein Knoten ein komprimierter Knoten ist, dessen Knotenliste eine geringere als die maximale Anzahl von Einträgen aufweist, und wobei die Abbildungsvorschrift einen Komprimierungsindikator aufweist, der einem komprimierten Knoten zugeordnet ist,
**gekennzeichnet durch** folgende Merkmale:
eine Einrichtung zum Lesen (1300) des Komprimierungsindikators;
eine Einrichtung zum Lesen (1310) eines Abschnitts der virtuellen Adresse;
eine Einrichtung zum Ermitteln (1320) eines Eintrags in einer Knotenliste eines Knotens der Knotenebene, die dem gelesenen Abschnitt der virtuellen Adresse zugeordnet ist, unter Verwendung des gelesenen Abschnitts der virtuellen Adresse und des Komprimierungsindikators;
eine Einrichtung zum Lesen (1330) des ermittelten Eintrags der Knotenliste, um einen Knoten einer hierarchisch niedrigeren Knotenebene zu identifizieren, auf den **durch** den ermittelten Eintrag verwiesen wird; und
eine Einrichtung zum Ermitteln (1340) der physikalischen Adresse (440) unter Verwendung des Knotens der hierarchisch niedrigeren Knotenebene, auf den **durch** den ermittelten Eintrag verwiesen wird.

10. Rechnersystem mit einer Vorrichtung zum Ermitteln einer physikalischen Adresse aus einer virtuellen Adresse unter Verwendung einer hierarchischen Abbildungsvorschrift nach Patentanspruch 9.

11. Rechnersystem gemäß Anspruch 10, das als Chipkarte, Smartcard oder Sicherheits-IC ausgeführt ist.

## Claims

1. Method for determining a physical address from a virtual address by using a hierarchical mapping regulation with hierarchically arranged node levels, wherein a virtual address space is larger than a physical address space, the virtual address having portions (402 to 410), one portion of the virtual address being associated to a node level, the node level having at least one node, each node having a node list (418) with list entries, a list entry of a node list referring to a node of a hierarchically lower node level, wherein by using a list entry of a node list (434) of a hierarchically lowest node level the physical address (404) can be determined,
**characterized by**
a length of a portion of the virtual address defining a maximum number of entries of a node list of a node belonging to the node level associated to the portion, a node, whose node list has a lower than the maximum number of entries, being a compressed node, and the mapping regulation having a compression indicator associated to a compressed node, and
**characterized in that** the method further comprises:
reading (1300) the compression indicator;
reading (1310) a portion of the virtual address;
determining (1320) an entry in a node list of a node of a node level associated to the read portion of the virtual address, by using the read portion of the virtual address and the compression indicator;
reading (1330) the determined entry of the node list to identify a node of a hierarchically lower node level referenced by the determined entry; and
determining (1340) the physical address (440) by using the node of the hierarchically lower node level referenced by the determined entry.

2. Method according to claim 1, wherein the compression indicator is stored at a predetermined position in the node list of the compressed node, and
wherein in the step of reading (1310) the compression indicator it is jumped to the predetermined portion to read the compression indicator.

3. Method according to claim 1, wherein the compression indicator for a compressed node is stored in the list entry of a node list of a node of a hierarchically higher node level, and
wherein in the step of reading the compression indicator the compression indicator is obtained by reading a list entry of a node list of the node of the hierarchically higher node level.

4. Method according to one of the previous claims,
wherein a node list (804) of a compressed node comprises a number of list entries, wherein a list entry comprises a list index, wherein the node list of a compressed node is compressed such that the number of list entries in comparison to the maximum number is halved, if the most significant bit of each list index for all list entries unequal zero is equal, and
wherein in the step (1320) of determining the compression indicator is interpreted such that the most significant bit of the portion of the virtual address is ignored in determining the entry.

5. Method according to one of the previous claims,
wherein a node list (804) of a compressed node comprises a number of list entries, wherein a list entry comprises a list index, and
wherein a node list (806) of a compressed node is compressed such that the number of list entries is quartered in comparison to the maximum number, if the two most significant bits of each list index for all list entries unequal zero are equal, and
wherein in the step of determining (1320) the compression indicator is interpreted such that the two most significant bits of the portion of the virtual address are ignored in determining the entry.

6. Method according to one of the previous claims,
wherein an addressing by pages of the physical memory is provided, wherein a memory page is addressable via a base address and an offset value,
wherein the node lists of at least two compressed nodes are stored in the same physical memory page (1102), and
wherein a list entry of a node list of a node of a hierarchically higher node level comprises both a base address and an offset value for the memory page (1102), where the node list for the node is stored, which is referenced by the entry, and wherein in the step (1320) of determining the entry the determination is carried out by using the base address and the offset value.

7. Method according to one of the previous claims,
wherein in the step (1340) of determining the physical address the steps reading (1300) the compression indicator, reading (1310) a portion of the virtual address, determining (1320) an entry of the node list and reading (1330) the determined entry are carried out until the hierarchically lowest node level (434) is reached.

8. Method according to one of the previous claims,
wherein a predetermined value of a portion of the virtual address (406, 408) shows that a node level is skipped.

9. Apparatus for determining a physical address from a virtual address by using a hierarchical mapping regulation with hierarchically arranged node levels, a virtual address space being larger than a physical address space, the virtual address having portions (402 to 410), one portion of the virtual address being associated to a node level, the node level having at least one node, each node having a node list (418) with list entries, a list entry of a node list referring to a node of a hierarchically lower node level, wherein by using a list entry of a node list (434) of a hierarchically lowest node level the physical address (404) can be determined, a length of the portion of the virtual address defining a maximum number of entries of a node list of a node belonging to the node level associated to the portion, a node, whose node list has a lower than the maximum number of entries, being a compressed node, and the mapping regulation having a compression indicator associated to a compressed node,
**characterized by**
means for reading (1300) the compression indicator;
means for reading (1310) a portion of the virtual address;
means for determining (1320) an entry in a node list of a node of the node level associated to the read portion of the virtual address, by using the read portion of the virtual address and the compression indicator;
means for reading (1330) the determined entry of the node list to identify a node of a hierarchically lower node level which is referenced by the determined entry; and
means for determining (1340) the physical address (440) by using the node of the hierarchically lower node level which is referenced by the determined entry.

10. Computer system with an apparatus for determining a physical address from a virtual address by using a hierarchical mapping regulation according to claim 9.

11. Computer system according to claim 10, laid out as a chip card, smart card or security IC.

## Revendications

1. Procédé pour déterminer une adresse physique à partir d'une adresse virtuelle à l'aide d'une règle de reproduction hiérarchique avec des plans de noeuds disposés de manière hiérarchique, un espace d'adresse virtuelle étant plus grand qu'un espace d'adresse physique, l'adresse virtuelle présentant des segments (402 à 410), un segment de l'adresse virtuelle étant associé à un plan de noeuds, le plan de noeuds présentant au moins un noeud, chaque noeud présentant une liste de noeuds (418) avec des entrées de liste, une entrée d'une liste de noeuds renvoyant à un noeud d'un plan de noeuds hiérarchiquement inferieur, l'adresse physique (404) pouvant être déterminée à l'aide d'une entrée d'une liste de noeuds (434) d'un plan de noeuds hiérarchiquement le plus inferieur,
**caractérisé par le fait que**
une longueur d'un segment de l'adresse virtuelle définit un nombre maximum d'entrées d'une liste de noeuds d'un noeud appartenant au plan de noeuds associé au segment, un noeud étant un noeud comprimé dont la liste de noeuds présente un nombre d'entrées inférieur au nombre d'entrées maximum, et la règle de reproduction présentant un indicateur de compression qui est associé à un noeud comprimé, et **caractérisé par le fait que** le procédé présente les étapes suivantes:
lire (1300) l'indicateur de compression;
lire (1310) un segment de l'adresse virtuelle;
déterminer (1320) une entrée dans une liste de noeuds du plan de noeuds associé au segment lu de l'adresse virtuelle, à l'aide du segment lu de l'adresse virtuelle et de l'indicateur de compression;
lire (1330) l'entrée déterminée de la liste de noeuds, pour identifier un noeud d'un plan de noeuds hiérarchiquement inférieur auquel il est renvoyé par l'entrée déterminée; et
déterminer (1340) l'adresse physique (440) à l'aide du noeud du plan de noeuds hiérarchiquement inférieur auquel il est renvoyé par l'entrée déterminée.

2. Procédé selon la revendication 1, dans lequel l'indicateur de compression est mémorisé à un endroit prédéterminé dans la liste de noeuds du noeud comprimé, et
dans lequel, à l'étape de lecture (1310) de l'indicateur de compression, il est sauté à l'endroit prédéterminé pour lire l'indicateur de compression.

3. Procédé selon la revendication 1, dans lequel l'indicateur de compression pour un noeud comprimé est mémorisé dans l'entrée de liste d'une liste de noeuds d'un noeud d'un plan de noeuds hiérarchiquement supérieur, et
dans lequel, à l'étape de lecture de l'indicateur de compression, l'indicateur de compression est obtenu lors d'une lecture d'une entrée d'une liste de noeuds du noeud du plan de noeuds hiérarchiquement supérieur.

4. Procédé selon l'une des revendications précédentes,
dans lequel une liste de noeuds (804) d'un noeud comprimé présente un certain nombre d'entrées de liste, une entrée de liste présentant un indice de liste, la liste de noeuds d'un noeud comprimé étant comprimée de sorte que le nombre d'entrées de liste soit de la moitié, comparé au nombre maximum, chaque fois que le bit à la valeur la plus grande de chaque indice de liste pour toutes les entrées de liste différentes de zéro est identique, et
dans lequel, à l'étape (1320) de détermination, l'indicateur de compression est interprété de sorte que le bit à la valeur supérieure du segment de l'adresse virtuelle soit ignoré lors de la détermination de l'entrée.

5. Procédé selon l'une des revendications précédentes, dans lequel une liste de noeuds (804) d'un noeud comprimé présente un certain nombre d'entrées de liste, une entrée de liste présentant un indice de liste, et
dans lequel une liste de noeuds (806) d'un noeud comprimé est comprimée de sorte que le nombre d'entrées de liste soit d'un quart, comparé au nombre maximum, chaque fois que les deux bits à la valeur supérieure de chaque indice de liste pour toutes les entrées de liste différentes de zéro sont identiques, et
dans lequel, à l'étape de détermination (1320), l'indicateur de compression est interprété de sorte que les deux bits à la valeur supérieure du segment de l'adresse virtuelle soient ignorés lors de la détermination de l'entrée.

6. Procédé selon l'une des revendications précédentes, dans lequel est prévu un adressage par page de la mémoire physique, une page de mémoire pouvant être adressée à l'aide d'une adresse de base et d'une valeur de décalage,
dans lequel des listes de noeuds d'au moins deux noeuds comprimés sont mémorisées dans la même page de mémoire physique (1102), et
dans lequel une entrée de liste d'une liste de noeuds d'un noeud d'un plan de noeuds hiérarchiquement supérieur comprend tant une adresse de base qu'une valeur de décalage pour la page de mémoire (1102) à laquelle est mémorisée la liste de noeuds pour le noeud auquel il est renvoyé par l'entrée, et
dans lequel, à l'étape (1320) de détermination de l'entrée, il est procédé à la détermination à l'aide de l'adresse de base et de la valeur de décalage.

7. Procédé selon l'une des revendications précédentes,
dans lequel sont effectuées, à l'étape (1340) de détermination de l'adresse physique, les étapes de lecture (1300) de l'indicateur de compression, de lecture (1310) d'un segment de l'adresse virtuelle, de détermination (1320) d'une entrée de la liste de noeuds et de lecture (1330) de l'entrée déterminée, jusqu'à ce que soit atteint le plan de noeuds hiérarchiquement le plus bas (434).

8. Procédé selon l'une des revendications précédentes,
dans lequel une valeur prédéterminée d'un segment de l'adresse virtuelle (406, 408) indique qu'un plan de noeuds est sauté.

9. Dispositif pour déterminer une adresse physique à partir d'une adresse virtuelle à l'aide d'une règle de reproduction hiérarchique, avec des plans de noeuds disposés hiérarchiquement, un espace d'adresse virtuelle étant plus grand qu'un espace d'adresse physique, l'adresse virtuelle présentant des segments (402 à 410), un segment de l'adresse virtuelle étant associé à un plan de noeuds, le plan de noeuds présentant au moins un noeud, chaque noeud présentant une liste de noeuds (418) avec des entrées de liste, une entrée de liste d'une liste de noeuds renvoyant à un noeud d'un plan de noeuds hiérarchiquement plus bas, l'adresse physique (404) pouvant être déterminée à l'aide d'une entrée de liste d'une liste de noeuds (434) d'un plan de noeuds hiérarchiquement le plus bas, une longueur d'un segment de l'adresse virtuelle définissant un nombre maximum d'entrées d'un noeud qui appartient au plan de noeuds qui est associé au segment, un noeud étant un noeud comprimé dont la liste de noeuds présente un nombre d'entrées inférieur au nombre d'entrées maximum et la règle de reproduction présentant un indicateur de compression qui est associé à un noeud comprimé,
**caractérisé par** les caractéristiques suivantes:
un moyen destiné à lire (1300) l'indicateur de compression;
un moyen destiné à lire (1310) un segment de l'adresse virtuelle;
un moyen destiné à déterminer (1320) une entrée dans une liste de noeuds d'un noeud du plan de noeuds qui est associé au segment lu de l'adresse virtuelle, à l'aide du segment lu de l'adresse virtuelle et de l'indicateur de compression;
un moyen destiné à lire (1330) l'entrée déterminée de la liste de noeuds, pour identifier un noeud d'un plan de noeuds hiérarchiquement inférieur auquel il est renvoyé par l'entrée déterminée; et
un moyen destiné à déterminer (1340) l'adresse physique (440) à l'aide du noeud du plan de noeuds hiérarchiquement inférieur auquel il est renvoyé par l'entrée déterminée.

10. Système d'ordinateur avec un dispositif pour déterminer une adresse physique à partir d'une adresse virtuelle a l'aide d'une règle de reproduction hiérarchique selon la revendication 9.

11. Système d'ordinateur selon la revendication 10 qui est réalisé sous forme de carte à puce, de carte intelligente ou de CI de sécurité.
